# EUROPÄISCHE PATENTSCHRIFT

(11) **EP 3 657 584 B1**
(45) Veröffentlichungstag und Bekanntmachung des Hinweises auf die Patenterteilung: **16.06.2021**
(21) Anmeldenummer: 19204761.1
(22) Anmeldetag: 23.10.2019
(51) Int. Cl.: H01M 8/04119, H01M 8/04223, H01M 8/04291, H01M 8/04029, H01M 16/00, H01M 8/04007, B01D 5/00, B01D 53/26

(54) **KÜHL- UND GASENTFEUCHTUNGSSYSTEM, TRANSPORTMITTEL UND VERFAHREN ZUM BETREIBEN EINES KÜHL- UND GASENTFEUCHTUNGSSYSTEMS**
COOLING AND GAS DEHUMIDIFYING SYSTEM, TRANSPORT MEANS AND METHOD FOR OPERATING A COOLING AND GAS DEHUMIDIFYING SYSTEM
SYSTÈME DE REFROIDISSEMENT ET DE DÉSHUMIDIFICATION DE GAZ, MOYEN DE TRANSPORT ET PROCÉDÉ DE FONCTIONNEMENT D'UN SYSTÈME DE REFROIDISSEMENT ET DE DÉSHUMIDIFICATION DE GAZ

(30) Priorität: 15.11.2018 DE 102018128715
(43) Veröffentlichungstag der Anmeldung: 27.05.2020
(73) Patentinhaber: Airbus Operations GmbH, 21129 Hamburg (DE)
(72) Erfinder: Piesker, Markus, 21129 Hamburg (DE)

(56) Entgegenhaltungen:
- EP-A2- 2 289 802
- DE-A1-102008 060 533
- DE-A1-102012 008 494
- US-A1- 2006 099 471
- US-A1- 2012 261 512

## Beschreibung

Die Erfindung betrifft ein Kühl- und Gasentfeuchtungssystem, das dazu in der Lage ist, einen Verbraucher zu kühlen und mit trockenem Gas zu versorgen. Ferner betrifft die Erfindung ein mit einem derartigen Kühl- und Gasentfeuchtungssystem ausgestattetes Transportmittel sowie ein Verfahren zum Betreiben eines derartigen Kühl- und Gasentfeuchtungssystems.

In regenerativen Brennstoffzellensystemen dient eine Brennstoffzelle dazu, Wasserstoff und Sauerstoff zu Wasser umzusetzen und dabei elektrischen Strom zu erzeugen. Ein der Brennstoffzelle nachgeschalteter Elektrolyseur spaltet das von der Brennstoffzelle erzeugte Wasser wieder in die Gase Wasserstoff und Sauerstoff. Diese Gase werden dann in die Brennstoffzelle zurückgeführt und dort erneut zur Stromerzeugung verwendet. Im Betrieb müssen die Brennstoffzelle und der Elektrolyseur gekühlt werden. Daher sind in einem regenerativen Brennstoffzellensystem die Brennstoffzelle und der Elektrolyseur in einem Kühlkreislauf angeordnet, in dem ein thermisches Fluid im Kreislauf geführt wird. Beim Durchströmen der Brennstoffzelle und des Elektrolyseurs nimmt das thermische Fluid Wärmeenergie auf. Die Kühlung des thermischen Fluids erfolgt in einer in dem Kühlkreislauf angeordneten Kühlanordnung.

Um einen hohen Wirkungsgrad der Brennstoffzelle zu erzielen, müssen die der Brennstoffzelle zugeführten Gase einen besonders hohen Trocknungsgrad, d.h. einen sehr geringen Wassergehalt (idealerweise einen Wassergehalt gleich Null) aufweisen. Daher sind regenerative Brennstoffzellensysteme üblicherweise mit einem Gasentfeuchter ausgestattet, der dazu dient, die in der Brennstoffzelle zur Stromerzeugung genutzten Gase vor der Zufuhr in die Brennstoffzelle zu entfeuchten. Bei der Trocknung oder Entfeuchtung von Gasen wird die Temperatur des Gases abgesenkt, sodass diese unter den Taupunkt von Wasser fällt. Dabei kann das in dem Gas enthaltene Wasser als Tauwasser abgeschieden werden. Je tiefer die Temperatur abgesenkt wird, desto trockener wird das Gas. Das Kühlen des Gases erfolgt üblicherweise mittels eines entsprechenden Wärmeübertragers, der dem Gas Wärmeenergie entzieht.

Ein besonders hoher Trocknungsgrad wird erreicht, wenn das zu trocknende Gas in dem Gasentfeuchter unter den Gefrierpunkt von Wasser abgekühlt wird. Dies hat jedoch zur Folge, dass in dem Wärmeübertrager das auskondensierte Wasser gefriert, beispielsweise an einer kalten Wandung des Wärmeübertragers oder in Form von Eiskristallen, die aus dem Gas ausgeschieden werden. Die Ablagerung von Eiskristallen in dem Wärmeübertrager hat jedoch eine zunehmende Verengung des Strömungsquerschnitts des Wärmeübertragers. Ferner verringern die an den Wänden des Wärmeübertragers wachsenden Eisschichten zunehmend die Leistung des Wärmeübertragers. Daher ist es im Betrieb eines Gasentfeuchter erforderlich, den Wärmeübertrager des Gasentfeuchter regelmäßig zu enteisen. Dies erfolgt meist durch Heizen des Wärmeübertragers. So kann beispielsweise ein Kühlluftstrom durch einen Heizluftstrom ersetzt werden, der die Wandung des Wärmeübertragers, an der sich eine Eisschicht gebildet hat, erwärmt, sodass das Eis geschmolzen wird. US 2012/261512 A1, US 2006/099471 A1, EP 2 289 802 A2, DE 10 2008 060533 A1 und DE 10 2012 008494 A1 beschreiben Kühl- und Gasentfeuchtungssysteme für Brennstoffzellen betriebene Transportmittel, die sich ebenfalls mit der Entfernung von Eis bzw. der Verhinderung der Eisbildung beschäftigen.

Der Erfindung liegt daher die Aufgabe zugrunde, ein Kühl- und Gasentfeuchtungssystem bereitzustellen, das dazu in der Lage ist, einen Verbraucher zu kühlen und mit trockenem Gas zu versorgen und das besonders effizient betreibbar ist. Ferner ist die Erfindung auf die Aufgabe gerichtet, ein mit einem derartigen Kühl- und Gasentfeuchtungssystem ausgestattetes Transportmittel sowie ein Verfahren zum Betreiben eines derartigen Kühl- und Gasentfeuchtungssystems anzugeben.

Diese Aufgabe wird durch ein Kühl- und Gasentfeuchtungssystem mit den Merkmalen des Anspruchs 1, ein Transportmittel mit den Merkmalen des Anspruchs 14 und ein Verfahren zum Betreiben eines Kühl- und Gasentfeuchtungssystems mit den Merkmalen des Anspruchs 15 gelöst.

Ein Kühl- und Gasentfeuchtungssystem, das zum Einsatz in einem Transportmittel geeignet ist, umfasst einen Kühlkreislauf, in dem ein thermisches Fluid im Kreislauf geführt wird. Bei dem Transportmittel handelt es sich vorzugsweise um ein Luftfahrzeug. Das in dem Kühlkreislauf zirkulierende thermische Fluid kann flüssig oder gasförmig sein. Zur Förderung des thermischen Fluids durch den Kühlkreislauf kann in dem Kühlkreislauf eine beispielsweise in Form einer Pumpe oder eines Gebläses ausgebildete Fördereinrichtung angeordnet sein.

Eine in dem Kühlkreislauf angeordnete Kühlanordnung ist dazu eingerichtet, das den Kühlkreislauf durchströmende thermische Fluid zu kühlen. Die Kühlanordnung kann beispielsweise einen Wärmeübertrager umfassen, der dazu eingerichtet ist, das den Kühlkreislauf durchströmende thermische Fluid thermisch mit durch den Wärmeübertrager geleiteter kalter Außenluft zu koppeln. Der Wärmeübertrager kann beispielsweise in einem Stauluftkanal angeordnet sein, durch den durch eine entsprechende Steuerung der Position einer Stauluftkanalklappe kalte Außenluft geleitet werden kann. Die kalte Außenluft, die im Flugbetrieb eines mit dem Kühl- und Gasentfeuchtungssystem ausgestatteten Luftfahrzeugs eine Temperatur von unter -30 °C aufweisen kann, dient dann als Wärmesenke für die von dem thermischen Fluid beim Durchströmen der Kühlanordnung abzuführenden Wärme. Unmittelbar stromabwärts der Kühlanordnung kann das in dem Kühlkreislauf zirkulierende thermische Fluid beispielsweise eine Temperatur von ca. -15 °C haben. Die Begriffe "stromabwärts" und "stromaufwärts" beziehen sich hier auf die Strömungsrichtung des thermischen Fluids durch den Kühlkreislauf.

Ferner umfasst das Kühl- und Gasentfeuchtungssystem einen Verbraucher, der dazu eingerichtet ist, Wärmeenergie an das den Kühlkreislauf durchströmende thermische Fluid abzugeben. Hierzu ist vorzugsweise eine thermische Kopplung zwischen dem Verbraucher und dem den Kühlkreislauf durchströmenden thermischen Fluid vorgesehen. Stromabwärts der thermischen Kopplung mit dem Verbraucher weist das thermische Fluid demzufolge eine höhere Temperatur auf als stromaufwärts der thermischen Kopplung mit dem Verbraucher. Beispielsweise kann die Temperatur des den Kühlkreislauf stromabwärts des Verbrauchers durchströmenden thermischen Fluids ca. +80 °C betragen. Der Verbraucher kann eine Brennstoffzelle umfassen, die im Betrieb aus Wasserstoff und Sauerstoff Wasser erzeugt und dabei elektrische Energie freisetzt. Ferner kann der Verbraucher einen der Brennstoffzelle nachgeschalteten Elektrolyseur umfassen, der das von der Brennstoffzelle erzeugte Wasser elektrolytisch wieder in die Gase Wasserstoff und Sauerstoff zersetzt.

Schließlich umfasst das Kühl- und Gasentfeuchtungssystem einen Gasentfeuchter mit einer Wärmeübertrageranordnung. Die Wärmeübertrageranordnung ist dazu eingerichtet, in einem Gasentfeuchtungsbetriebszustand mit dem den Kühlkreislauf stromabwärts der Kühlanordnung durchströmenden und eine erste Temperatur aufweisenden thermischen Fluid thermisch gekoppelt zu werden und dabei Wärmeenergie an das thermische Fluid abzugeben. In ihrem Gasentfeuchtungsbetriebszustand wird die Wärmeübertrageranordnung des Gasentfeuchters ferner von mindestens einem zu entfeuchtenden Gas durchströmt. Beispielsweise kann die Wärmeübertrageranordnung in ihren Gasentfeuchtungsbetriebszustand von einer Brennstoffzelle des Verbrauchers zuzuführendem Wasserstoff und/oder Sauerstoff durchströmt werden. Beim Durchströmen der Wärmeübertrageranordnung wird das zu entfeuchtenden Gas unter den Taupunkt von Wasser gekühlt, so dass das in dem Gas enthaltene Wasser als Tauwasser abgeschieden werden kann. Die bei diesem Prozess von dem zu entfeuchtenden Gas abgegebene Wärme wird an das in dem Kühlkreislauf zirkulierende thermische Fluid übertragen.

Da die Gasentfeuchtung in der Wärmeübertrageranordnung des Gasentfeuchters umso effektiver abläuft, je tiefer das die Wärmeübertrageranordnung durchströmende zu entfeuchtenden Gas heruntergekühlt wird, ist es vorteilhaft, wenn das thermische Fluid, das die von dem zu entfeuchtenden Gas bei der Trocknung abgegebene Wärme aufnimmt, eine möglichst tiefe Temperatur aufweist. Daher ist die Wärmeübertrageranordnung des Gasentfeuchters in ihren Gasentfeuchtungsbetriebszustand vorzugsweise unmittelbar stromabwärts der Kühlanordnung mit dem in dem Kühlkreislauf zirkulierenden thermischen Fluid thermisch gekoppelt, wobei "unmittelbar stromabwärts" in diesem Kontext bedeutet, dass zwischen der Kühlanordnung und der Wärmeübertrageranordnung des Gasentfeuchters keine Wärme an das thermische Fluid abgebenden Komponenten mit dem Kühlkreislauf gekoppelt sind. Beispielsweise kann das thermische Fluid bei ihrer thermischen Kopplung mit der Wärmeübertrageranordnung des Gasentfeuchters in deren Gasentfeuchtungsbetriebszustand eine erste Temperatur von ca. -15 °C haben. Bei dieser Temperatur des thermischen Fluid findet eine effektive Trocknung des die Wärmeübertrageranordnung durchströmenden Gases statt. Allerdings führt die Kühlung des die Wärmeübertrageranordnung durchströmenden Gases auf eine Temperatur unterhalb des Gefrierpunkts von Wasser zu einer Vereisung der Wärmeübertrageranordnung.

Aus diesem Grund ist die Wärmeübertrageranordnung des Gasentfeuchters ferner dazu eingerichtet, in einem Enteisungsbetriebszustand mit dem den Kühlkreislauf stromabwärts des Verbrauchers durchströmenden und eine zweite Temperatur aufweisenden thermischen Fluid thermisch gekoppelt zu werden und dabei Wärmeenergie von dem thermischen Fluid aufzunehmen. Die zweite Temperatur ist höher als die erste Temperatur. Mit anderen Worten, in ihrem Enteisungsbetriebszustand wird die Wärmeübertrageranordnung des Gasentfeuchters mithilfe des in dem Kühlkreislauf zirkulierenden thermischen Fluids erwärmt und dadurch enteist. Bei ihrer thermischen Kopplung mit der Wärmeübertrageranordnung des Gasentfeuchters in deren Enteisungsbetriebszustand hat das thermische Fluid vorzugsweise eine zweite Temperatur oberhalb des Gefrierpunkts von Wasser, um eine effektive Enteisung der Wärmeübertrageranordnung zu gewährleisten.

Eine besonders effektive und effiziente Enteisung der Wärmeübertrageranordnung ist dann möglich, wenn die Wärmeübertrageranordnung des Gasentfeuchters in ihrem Enteisungsbetriebszustand unmittelbar stromabwärts des Verbrauchers mit dem in dem Kühlkreislauf zirkulierenden thermischen Fluid thermisch gekoppelt ist, wobei "unmittelbar stromabwärts" in diesem Kontext bedeutet, dass zwischen dem Verbraucher und der Wärmeübertrageranordnung keine Wärme von dem thermischen Fluid aufnehmenden und das thermische Fluid dabei kühlenden Komponenten mit dem Kühlkreislauf gekoppelt sind. Beispielsweise kann das thermische Fluid bei seiner thermischen Kopplung mit der Wärmeübertrageranordnung des Gasentfeuchters in deren Enteisungsbetriebszustand eine zweite Temperatur von ca. +80 °C haben. Dadurch wird eine rasche Enteisung der Wärmeübertrageranordnung ermöglicht. Ferner kann die Vereisung der Wärmeübertrageranordnung verlangsamt werden, wenn in dem Kühl- und Gasentfeuchtungssystem statt reinem Wasser beispielsweise eine Ethylenglykol-Wassermischung oder eine Propylenglykol-Wassermischung als thermisches Fluid verwendet wird.

Im Betrieb des Kühl- und Gasentfeuchtungssystems wird folglich das den Kühlkreislauf durchströmende thermische Fluid sowohl zur Kühlung als auch zur Erwärmung der Wärmeübertrageranordnung des Gasentfeuchters genutzt. Dies wird dadurch ermöglicht, dass die Wärmeübertrageranordnung des Gasentfeuchters in Abhängigkeit ihres Betriebszustands mit unterschiedlichen Bereichen des Kühlkreislaufs thermisch gekoppelt wird, so dass der Wärmeübertrageranordnung in Abhängigkeit ihres Betriebszustands entweder sehr kaltes oder warmes thermisches Fluid als Wärmesenke oder als Wärmequelle zur Verfügung gestellt wird. Das Kühl- und Gasentfeuchtungssystem ist folglich besonders effizient betreibbar und zeichnet sich überdies durch eine geringe Anzahl von Einzelkomponenten und folglich einen geringen Einbauraumbedarf aus.

In einer bevorzugten Ausführungsform umfasst das Kühl- und Gasentfeuchtungssystem ein erstes Steuerventil, das dazu eingerichtet ist, das den Kühlkreislauf stromabwärts des Verbrauchers durchströmende und folglich warme thermische Fluid der Wärmeübertrageranordnung des Gasentfeuchters und/oder einem Speicherbehälter zuzuführen. Beispielsweise kann das erste Steuerventil einen stromabwärts des Verbrauchers verlaufenden ersten Abschnitt des Kühlkreislaufs mit einem in Richtung der Wärmeübertrageranordnung führenden zweiten Abschnitt des Kühlkreislaufs verbinden, wenn sich die Wärmeübertrageranordnung in ihrem Enteisungsbetriebszustand befindet und mithilfe des den Kühlkreislauf stromabwärts des Verbrauchers durchströmenden warmen thermischen Fluids erwärmt werden soll. Wenn sich die Wärmeübertrageranordnung des Gasentfeuchters dagegen in ihrem Gasentfeuchtungsbetriebszustand befindet, kann das erste Steuerventil für eine Trennung des ersten Abschnitts des Kühlkreislaufs von dem zweiten Abschnitt des Kühlkreislaufs sorgen und den ersten Abschnitt des Kühlkreislaufs stattdessen mit einem in Richtung des Speicherbehälters führenden dritten Abschnitt des Kühlkreislaufs verbinden. Falls gewünscht, kann das erste Steuerventil auch dazu eingerichtet sein, eine variable Strömungssteuerung auszuführen. Beispielsweise kann das erste Steuerventil so gestaltet sein, dass es das den ersten Abschnitt des Kühlkreislaufs durchströmende thermische Fluid teilweise in den zweiten und teilweise in den dritten Abschnitt des Kühlkreislaufs leitet.

Ferner kann das Kühl- und Gasentfeuchtungssystem ein zweites Steuerventil umfassen, das dazu eingerichtet ist, das den Kühlkreislauf stromabwärts der Kühlanordnung durchströmende und folglich kalte thermische Fluid der Wärmeübertrageranordnung des Gasentfeuchters und/oder dem Speicherbehälter zuzuführen. Beispielsweise kann das zweite Steuerventil einen stromabwärts der Kühlanordnung verlaufenden vierten Abschnitt des Kühlkreislaufs mit einem in Richtung der Wärmeübertrageranordnung des Gasentfeuchters führenden fünften Abschnitt des Kühlkreislaufs verbinden, wenn sich die Wärmeübertrageranordnung in ihrem Gasentfeuchtungsbetriebszustand befindet und mithilfe des den Kühlkreislauf stromabwärts der Kühlanordnung durchströmenden kalten thermischen Fluids gekühlt werden soll. Wenn sich die Wärmeübertrageranordnung dagegen in ihrem Enteisungsbetriebszustand befindet, kann das zweite Steuerventil für eine Trennung des vierten Abschnitts des Kühlkreislaufs von dem fünften Abschnitt des Kühlkreislaufs sorgen und den vierten Abschnitt des Kühlkreislaufs stattdessen mit einem in Richtung des Speicherbehälters führenden sechsten Abschnitt des Kühlkreislaufs verbinden. Falls gewünscht, kann das zweite Steuerventil auch dazu eingerichtet sein, eine variable Strömungssteuerung auszuführen. Beispielsweise kann das zweite Steuerventil so gestaltet sein, dass es das den vierten Abschnitt des Kühlkreislaufs durchströmende thermische Fluid teilweise in den fünften und teilweise in den sechsten Abschnitt des Kühlkreislaufs leitet.

Das erste und das zweite Steuerventil können separat voneinander ausgebildet sein. Alternativ dazu ist es jedoch auch denkbar, das Kühl- und Gasentfeuchtungssystem mit einer einzigen Ventilanordnung auszustatten, die die Funktionen sowohl des ersten als auch des zweiten Steuerventils ausführt.

Grundsätzlich ist es denkbar, den dritten Abschnitt des Kühlkreislaufs mit einem ersten Speicherbehälter und den sechsten Abschnitt des Kühlkreislaufs mit einem zweiten Speicherbehälter zu verbinden. Vorzugsweise sind das erste und das zweite Steuerventil jedoch dazu eingerichtet, das den Kühlkreislauf stromabwärts des Verbrauchers durchströmende thermische Fluid und das den Kühlkreislauf stromabwärts der Kühlanordnung durchströmende thermische Fluid demselben Speicherbehälter zuzuführen. Beispielsweise können der dritte und der sechste Abschnitt des Kühlkreislaufs in denselben Speicherbehälter münden. In dem Speicherbehälter wird dann das durch Wärmeübertragung von dem Verbraucher erwärmte thermische Fluid mit dem mithilfe der Kühlanordnung gekühlten thermischen Fluid gemischt.

Der Speicherbehälter kann ferner stromabwärts der Wärmeübertrageranordnung des Gasentfeuchters in dem Kühlkreislauf angeordnet sein. Insbesondere kann der Speicherbehälter mit einem stromabwärts der Wärmeübertrageranordnung verlaufenden siebten Abschnitt des Kühlkreislaufs verbunden sein, so dass thermisches Fluid, das im Gasentfeuchtungsbetriebszustand der Wärmeübertrageranordnung Wärme von dem zu entfeuchtenden Gas aufnimmt und dabei erwärmt wird, in den Speicherbehälter geleitet werden kann. In dem Speicherbehälter kann dieses thermische Fluid dann mit dem warmen thermischen Fluid aus dem dritten Abschnitt des Kühlkreislaufs und/oder dem kalten thermischen Fluid aus dem sechsten Abschnitt des Kühlkreislaufs gemischt werden.

In dem Kühlkreislauf kann stromaufwärts des Verbrauchers eine Heizeinrichtung angeordnet sein. Die Heizeinrichtung ist vorzugsweise dazu eingerichtet, das den Kühlkreislauf durchströmende thermische Fluid vor dessen thermischer Kopplung mit dem Verbraucher zu erwärmen. Die Anordnung einer Heizeinrichtung in dem Kühlkreislauf ist dann sinnvoll, wenn das den Kühlkreislauf durchströmende thermische Fluid zwar zur Kühlung des Verbrauchers genutzt werden soll, das thermische Fluid bei der thermischen Kopplung mit dem Verbraucher jedoch deutlich wärmer sein soll als bei der thermischen Kopplung mit der Wärmeübertrageranordnung des Gasentfeuchters. Wenn der Verbraucher eine Brennstoffzelle umfasst, die durch das den Kühlkreislauf durchströmende thermische Fluid gekühlt werden soll, beträgt die Temperatur des thermischen Fluids vor der thermischen Kopplung mit dem Verbraucher vorzugsweise 75 °C.

Die Heizeinrichtung ist vorzugsweise stromabwärts von dem Speicherbehälter in dem Kühlkreislauf angeordnet. Bei einer derartigen Konfiguration muss die Heizeinrichtung nur dann betrieben werden, wenn sich in dem Speicherbehälter, in dem warmes thermisches Fluid aus dem dritten Abschnitt des Kühlkreislaufs, kaltes thermisches Fluid aus dem sechsten Abschnitt des Kühlkreislaufs und/oder thermisches Fluid aus dem siebten Abschnitt des Kühlkreislaufs gemischt wird, nicht die für die thermische Kopplung mit dem Verbraucher geeignete Temperatur des thermischen Fluids einstellt. Dies kann beispielsweise der Fall sein, wenn sich die Wärmeübertrageranordnung des Gasentfeuchters in ihrem Enteisungsbetriebszustand befindet und folglich kein warmes thermisches Fluid aus dem dritten Abschnitt des Kühlkreislaufs, dafür aber kaltes thermisches Fluid aus dem sechsten Abschnitt des Kühlkreislaufs in den Speicherbehälter geleitet wird. Die Fördereinrichtung zur Förderung des thermischen Fluids durch den Kühlkreislauf kann zwischen dem Speicherbehälter und der Heizeinrichtung in dem Kühlkreislauf angeordnet sein.

In einer bevorzugten Ausführungsform des Kühl- und Gasentfeuchtungssystems umfasst der Kühlkreislauf einen thermisch mit dem Verbraucher gekoppelten ersten Kreislaufzweig. Ferner kann der Kühlkreislauf einen zweiten Kreislaufzweig umfassen, der parallel zu dem ersten Kreislaufzweig verläuft und thermisch mit der Kühlanordnung gekoppelt ist. Dementsprechend kann in dem Kühlkreislauf stromaufwärts des Verbrauchers und der Kühlanordnung ein Verzweigungspunkt vorgesehen sein, an dem sich der Kühlkreislauf in den ersten und den zweiten Kreislaufzweig verzweigt. Dieser Verzweigungspunkt kann beispielsweise stromabwärts der Heizeinrichtung in dem Kühlkreislauf angeordnet sein.

Ferner kann das Kühl- und Gasentfeuchtungssystem eine Strömungssteuerungseinrichtung umfassen, die dazu eingerichtet ist, einen ersten Teilvolumenstrom des den Kühlkreislauf durchströmenden thermischen Fluids in den ersten Kreislaufzweig und einen zweiten Teilvolumenstrom des den Kühlkreislauf durchströmenden thermischen Fluids in den zweiten Kreislaufzweig zu leiten. Die Strömungssteuerungseinrichtung ist vorzugsweise im Bereich des Verzweigungspunkts angeordnet, an dem sich der Kühlkreislauf in den ersten und den zweiten Kreislaufzweig verzweigt. Beispielsweise kann die Strömungssteuerungseinrichtung einen hydraulischen Widerstand umfassen, der für eine entsprechende Aufteilung des den Kühlkreislauf stromaufwärts des Verzweigungspunkts durchströmenden thermischen Fluids in den ersten Teilvolumenstrom und den zweiten Teilvolumenstrom sorgt. Der erste Teilvolumenstrom ist vorzugsweise größer als der zweite Teilvolumenstrom. Dementsprechend wird dem Verbraucher vorzugsweise ein größerer Volumenstrom des thermischen Fluids zugeführt als der Kühlanordnung.

Die Wärmeübertrageranordnung des Gasentfeuchters ist vorzugsweise dazu eingerichtet, aus ihrem Gasentfeuchtungsbetriebszustand in ihren Enteisungsbetriebszustand überzugehen, wenn ein Druckverlust in einem die Wärmeübertrageranordnung durchströmenden zu entfeuchtenden Gasstrom, der durch vereiste Strömungskanäle in der Wärmeübertrageranordnung verursacht wird, einen Schwellwert überschreitet. Ferner kann die Wärmeübertrageranordnung dazu eingerichtet sein, den Enteisungsbetriebszustand einzuleiten, wenn eine Temperatur des die Wärmeübertrageranordnung durchströmenden zu entfeuchtenden Gasstroms infolge einer Verringerung der Wärmeübertragung zwischen dem zu entfeuchtenden Gas und dem thermischen Fluid durch eine Eisschicht in der Wärmeübertrageranordnung beim Austritt aus der Wärmeübertrageranordnung einen Schwellwert überschreitet.

Zusätzlich oder alternativ dazu ist es denkbar, dass die Wärmeübertrageranordnung dazu eingerichtet ist, aus ihrem Gasentfeuchtungsbetriebszustand in ihren Enteisungsbetriebszustand überzugehen, wenn ein Feuchtigkeitsgehalt des die Wärmeübertrageranordnung durchströmenden zu entfeuchtenden Gasstroms beim Austritt aus der Wärmeübertrageranordnung einen Schwellwert überschreitet. Dadurch wird einer nachlassenden Trocknungsqualität in dem Gasentfeuchter durch die Vereisung der Wärmeübertrageranordnung entgegengewirkt. Ferner kann die Wärmeübertrageranordnung dazu eingerichtet sein, den Enteisungsbetriebszustand einzuleiten, wenn ein Massen- oder Volumenstrom des die Wärmeübertrageranordnung durchströmenden zu entfeuchtenden Gasstroms beim Austritt aus der Wärmeübertrageranordnung infolge einer Vereisung der Strömungskanäle in der Wärmeübertrageranordnung einen Schwellwert unterschreitet. Ein weiterer Parameter, den die Wärmeübertrageranordnung heranziehen kann, um aus ihrem Gasentfeuchtungsbetriebszustand in ihren Enteisungsbetriebszustand überzugehen, ist der Ablauf eines Zeitintervalls.

Zur Steuerung seines Betriebszustands kann die Wärmeübertrageranordnung lediglich einen der oben genannten Parameter heranziehen. Alternativ dazu können jedoch auch Parameterkombinationen dazu verwendet werden, die Wärmeübertrageranordnung zu veranlassen, einen Wechsel seines Betriebszustands einzuleiten. Zur Steuerung des Betriebszustands der Wärmeübertrageranordnung kann der Gasentfeuchter eine Steuereinheit umfassen, die insbesondere dazu eingerichtet ist, das erste und das zweite Steuerventil des Kühl- und Gasentfeuchtungssystems entsprechend anzusteuern. Für einen oder mehrere der oben genannten Parameter können entsprechende Kurven in einem Speicher der Steuereinheit hinterlegt werden, die Rückschlüsse auf die Vereisung der Strömungskanäle in der Wärmeübertrageranordnung erlauben.

Der Gasentfeuchter des Kühl- und Gasentfeuchtungssystems umfasst vorzugsweise eine Gasleitung, die von dem in dem Gasentfeuchter zu entfeuchtenden Gas durchströmbar ist. Die Gasleitung dient dementsprechend dazu, das zu trocknende Gas auf einem bestimmten Strömungsweg durch den Gasentfeuchter zu leiten. In der Gasleitung kann ein erster Wärmeübertrager der Wärmeübertrageranordnung angeordnet sein. Wenn die Wärmeübertrageranordnung des Gasentfeuchters lediglich einen Wärmeübertrager umfasst, ist der erste Wärmeübertrager in seinem Gasentfeuchtungsbetriebszustand thermisch mit dem den Kühlkreislauf stromabwärts der Kühlanordnung durchströmenden und die erste Temperatur aufweisenden thermischen Fluid gekoppelt, so dass das Gas in der Gasleitung beim Durchströmen des ersten Wärmeübertragers gekühlt und dabei getrocknet wird.

Im Gegensatz dazu ist der erste Wärmeübertrager in seinem Enteisungsbetriebszustand thermisch mit dem den Kühlkreislauf stromabwärts des Verbrauchers durchströmenden und die zweite Temperatur aufweisenden thermischen Fluid gekoppelt. Das Gas in der Gasleitung wird dann beim Durchströmen des ersten Wärmeübertragers nicht gekühlt und auch nicht getrocknet. Wenn der Enteisungsbetriebszustand des ersten Wärmeübertragers nur kurz, beispielsweise wenige Sekunden andauert, wird die Entfeuchtungsleistung des Gasentfeuchters dadurch jedoch nicht übermäßig beeinträchtigt. Wenn eine besonders hohe Entfeuchtungsqualität des Gasentfeuchters erforderlich ist, ist es auch möglich, die Zufuhr des zu trocknenden Gases zu dem Gasentfeuchter zu unterbrechen, solange sich der Wärmeübertrager in seinem Enteisungsbetriebszustand befindet. Dies kann durch eine entsprechende Steuerung eines in der Gasleitung angeordneten Ventils beispielsweise durch die Steuereinheit des Gasentfeuchters bewerkstelligt werden.

Ferner kann der Gasentfeuchter einen Wassersammler umfassen, der dazu eingerichtet ist, aus dem ersten Wärmeübertrager austretendes Wasser aufzunehmen. In dem Wassersammler kann im Gasentfeuchtungsbetriebszustand des ersten Wärmeübertragers aus dem ersten Wärmeübertrager austretendes Kondenswasser gesammelt werden. Ferner kann auch Tauwasser in den Wassersammler geleitet werden, das im Enteisungsbetriebszustand des ersten Wärmeübertragers aus dem ersten Wärmeübertrager austritt. Der Wassersammler kann in der Gasleitung angeordnet sein.

In einer Variante des Gasentfeuchters sind der Wassersammler und der erste Wärmeübertrager derart relativ zueinander angeordnet, dass das aus dem ersten Wärmeübertrager austretende Wasser schwerkraftgetrieben in den Wassersammler fließt. Für die Förderung des Wassers aus dem ersten Wärmeübertrager in den Wassersammler ist dann keine separate Fördereinrichtung erforderlich. Zusätzlich oder alternativ dazu kann der Wassersammler zumindest temporär thermisch mit dem den Kühlkreislauf stromabwärts des Verbrauchers durchströmenden und die zweite Temperatur aufweisenden thermischen Fluid gekoppelt sein. Der Wassersammler wird dann durch das warme thermische Fluid beheizt und dadurch vor Vereisung geschützt.

Der Gasentfeuchter kann ferner eine mit dem Wassersammler verbundene Wasserauslassleitung umfassen. In der Wasserauslassleitung kann ein drittes Steuerventil angeordnet sein, welches dazu eingerichtet ist, die Wasserabfuhr aus dem Wassersammler zu steuern. Insbesondere kann das dritte Steuerventil dazu eingerichtet sein, die Wasserauslassleitung freizugeben, wenn ein Wasserfüllstand in dem Wassersammler einen ersten Schwellwert überschreitet, und die Wasserauslassleitung wieder zu verschließen, bevor der Wasserfüllstand in dem Wassersammler einen zweiten Schwellwert unterschreitet, wobei der zweite Schwellwert geringer ist als der erste Schwellwert. Bei einem derartigen Betrieb des dritten Steuerventils verbleibt stets eine Restmenge an Wasser in den Wassersammler. Dadurch wird gewährleistet, dass stets lediglich Wasser, nicht aber Gas über die Wasserauslassleitung aus dem Wassersammler abgeleitet wird.

Beispielsweise kann das dritte Steuerventil dazu eingerichtet sein, die Wasserauslassleitung freizugeben, wenn ein erster Sensor anzeigt, dass der Wasserfüllstand in dem Wassersammler den ersten Schwellwert überschreitet. Der erste Schwellwert kann beispielsweise ein maximaler Wasserfüllstand des Wassersammlers sein. Ferner kann das dritte Steuerventil dazu eingerichtet sein, die Wasserauslassleitung wieder zu verschließen, wenn ein zweiter Sensor anzeigt, dass der Wasserfüllstand in dem Wassersammler den zweiten Schwellwert erreicht hat. Der zweite Schwellwert kann beispielsweise ein minimaler Wasserfüllstand des Wassersammlers sein. Alternativ oder zusätzlich dazu ist es jedoch auch möglich, dass das dritte Steuerventil dazu eingerichtet ist, die Wasserauslassleitung nach Ablauf eines definierten Zeitintervalls und/oder in Abhängigkeit einer Druckdifferenz zwischen dem Wassersammler und einem Auslass der Wasserauslassleitung zu öffnen und/oder wieder zu verschließen. Schließlich kann zur Steuerung des Betriebszustands des dritten Steuerventils auch mindestens einer der Parameter herangezogen werden, die auch zur Steuerung des Betriebszustands des Wärmeübertragers des Gasentfeuchters genutzt werden.

Der Betrieb des dritten Steuerventils kann beispielsweise durch die Steuereinheit des Gasentfeuchters gesteuert werden. Zur Steuerung des Betriebs des dritten Steuerventils erforderliche Kurven, beispielsweise eine die Druckdifferenz zwischen dem Wassersammler und einem Auslass der Wasserauslassleitung betreffende Kurve, können in dem Speicher der Steuereinheit hinterlegt sein.

Das dritte Steuerventil kann ein Ventil mit einem variablen Strömungsquerschnitt sein. Das dritte Steuerventil ist dann dazu eingerichtet, den Wasserdurchfluss durch die Wasserauslassleitung wie gewünscht zu steuern. Zusätzlich oder alternativ dazu kann in der Wasserauslassleitung ein Strömungswiderstand, eine Düse, eine Blende oder ein ähnliches Strömungssteuerungselement installiert sein, das eine lediglich definierte Durchflussmenge erlaubt, den Durchfluss begrenzt und folglich den Entleerungsvorgang des Wassersammlers verlängert bzw. Trägheit in das System bringt. Dadurch lassen sich Ungenauigkeiten bei den Schaltzyklen des dritten Steuerventils kompensieren.

Der Gasentfeuchter kann ferner einen zweiten Wärmeübertrager umfassen. Der erste und der zweite Wärmeübertrager des Gasentfeuchters können hintereinander in der Gasleitung des Gasentfeuchters angeordnet sein. Ferner können der erste und der zweite Wärmeübertrager dazu eingerichtet sein, wechselweise zwischen ihrem Enteisungsbetriebszustand und ihrem Gasentfeuchtungsbetriebszustand umgeschaltet zu werden. Mit anderen Worten, der erste Wärmeübertrager des Gasentfeuchters ist vorzugsweise thermisch mit dem den Kühlkreislauf stromabwärts der Kühlanordnung durchströmenden und die erste Temperatur aufweisenden thermischen Fluid thermisch gekoppelt, während der zweite Wärmeübertrager des Gasentfeuchters mit dem den Kühlkreislauf stromabwärts des Verbrauchers durchströmenden und die zweite Temperatur aufweisenden thermischen Fluid thermisch gekoppelt ist und dabei enteist wird. Umgekehrt ist der zweite Wärmeübertrager des Gasentfeuchters vorzugsweise thermisch mit dem den Kühlkreislauf stromabwärts der Kühlanordnung durchströmenden und die erste Temperatur aufweisenden thermischen Fluid thermisch gekoppelt, während der erste Wärmeübertrager des Gasentfeuchters mit dem den Kühlkreislauf stromabwärts des Verbrauchers durchströmenden und die zweite Temperatur aufweisenden thermischen Fluid thermisch gekoppelt ist und dabei enteist wird. Dadurch wird ein kontinuierlicher Betrieb des Gasentfeuchters ermöglicht.

Der Wassersammler des Gasentfeuchters kann dazu eingerichtet sein, aus dem zweiten Wärmeübertrager austretendes Wasser aufzunehmen. Mit anderen Worten, der Gasentfeuchter kann mit lediglich einem Wassersammler ausgestattet sein, der Wasser aus dem ersten und dem zweiten Wärmeübertrager aufnimmt. Vorzugsweise sind der Wassersammler und der zweite Wärmeübertrager derart relativ zueinander angeordnet, dass das aus dem zweiten Wärmeübertrager austretende Wasser schwerkraftgetrieben in den Wassersammler fließt.

Der Wassersammler kann zwischen dem ersten und dem zweiten Wärmeübertrager in der Gasleitung des Gasentfeuchters angeordnet sein. Das in dem Gasentfeuchter zu entfeuchtenden Gas strömt dann nacheinander durch den ersten Wärmetauscher, den Wassersammler und den zweiten Wärmetauscher. Wenn sich der erste Wärmetauscher in seinem Enteisungsbetriebszustand befindet, wird das zu trocknende Gas zwar zunächst durch den ersten Wärmetauscher geleitet, dabei jedoch nicht getrocknet. Eine Abkühlung und folglich Trocknung des Gases erfolgt erst beim Durchströmen des sich in seinem Gasentfeuchtungsbetriebszustand befindenden zweiten Wärmetauschers. Im Gegensatz dazu wird das zu trocknende Gas bereits in dem ersten Wärmetauscher getrocknet, wenn sich dieser in seinem Gasentfeuchtungsbetriebszustand befindet. Wenn sich der zweite Wärmetauscher dann in seinem Enteisungsbetriebszustand befindet, nimmt das Gas beim Durchströmen des zweiten Wärmetauschers zwar wieder etwas Feuchtigkeit auf. Da die Verweilzeit des Gases in dem zweiten Wärmetauscher jedoch gering ist, wird die Trocknungsqualität nicht übermäßig beeinträchtigt. Ein derart gestalteter Gasentfeuchter weist relativ wenige Komponenten und folglich eine kompakte Gestalt auf.

Der Gasentfeuchter kann ferner eine zwischen dem ersten und dem zweiten Wärmeübertrager von der Gasleitung abzweigende Bypassleitung umfassen. Insbesondere kann die Bypassleitung zwischen dem ersten Wärmeübertrager und dem Wassersammler von der Gasleitung abzweigen. Die Bypassleitung ist vorzugsweise mit dem Auslass der Gasleitung verbunden. Ferner kann in dem Gasentfeuchter ein viertes Steuerventil vorgesehen sein, das dazu eingerichtet ist, einen die Gasleitung durchströmenden Gasstrom nach dem Durchströmen des ersten Wärmetauschers in die Bypassleitung zu leiten, wenn sich der erste Wärmeübertrager in seinem Gasentfeuchtungsbetriebszustand befindet. In dem ersten Wärmeübertrager getrocknetes Gas kann dann nach dem Durchströmen des ersten Wärmeübertragers unmittelbar dem Auslass der Gasleitung zugeführt werden. Dadurch wird vermieden, dass das Gas beim Durchströmen des sich in seinem Enteisungsbetriebszustand befindenden zweiten Wärmeübertragers wieder Feuchtigkeit aufnimmt.

Das vierte Steuerventil ist vorzugsweise ferner dazu eingerichtet, den die Gasleitung durchströmenden Gasstrom nach dem Durchströmen des ersten Wärmeübertragers in den zweiten Wärmeübertrager zu leiten, wenn sich der erste Wärmeübertrager in seinem Enteisungsbetriebszustand befindet. Das die Gasleitung durchströmende Gas wird dann beim Durchströmen des sich in seinem Gasentfeuchtungsbetriebszustand befindenden zweiten Wärmeübertragers getrocknet. Ein derart ausgestalteter Gasentfeuchter liefert eine besonders hohe Trocknungsqualität.

Der erste und/oder der zweite Wärmeübertrager der Wärmeübertrageranordnung kann/können in Form eines Doppelrohrwärmeübertragers ausgebildet sein. Eine innere Leitung des ersten und/oder des zweiten Wärmeübertragers bildet dann vorzugsweise einen Abschnitt der Gasleitung. Das thermische Fluid zur Kühlung bzw. Beheizung des Wärmeübertragers durchströmt dagegen vorzugsweise einen durch eine äußere Leitung und die innere Leitung begrenzten Ringspalt.

Eine Längsachse eines ersten Rohrs des ersten und/oder des zweiten Wärmeübertragers kann sich in einem Winkel von 1 bis 10° relativ zu einer Längsachse eines zweiten Rohrs des ersten und/oder des zweiten Wärmeübertragers erstrecken. Durch die nicht parallele Anordnung der beiden Rohre wird die schwerkraftgetriebene Abführung von Kondenswasser erleichtert, wenn der Gasentfeuchter in einem sich bewegenden Transportmittel, und insbesondere einem sich dreidimensional bewegenden Luftfahrzeug verbaut ist.

Ein Transportmittel umfasst ein oben beschriebenes Kühl- und Gasentfeuchtungssystem. Das Transportmittel ist insbesondere in Form eines Luftfahrzeugs ausgebildet.

Bei einem Verfahren zum Betreiben eines Kühl- und Gasentfeuchtungssystem wird ein thermisches Fluid durch einen Kühlkreislauf geleitet. Das den Kühlkreislauf durchströmende thermische Fluid wird in einer in dem Kühlkreislauf angeordneten Kühlanordnung gekühlt. Das den Kühlkreislauf durchströmende thermische Fluid wird thermisch mit einem Verbraucher gekoppelt, der Wärmeenergie an das den Kühlkreislauf durchströmende thermische Fluid abgibt. Ein Gasstrom wird mittels eines Gasentfeuchters entfeuchtet, wobei eine Wärmeübertrageranordnung des Gasentfeuchters in einem Gasentfeuchtungsbetriebszustand mit dem den Kühlkreislauf stromabwärts der Kühlanordnung durchströmenden und eine erste Temperatur aufweisenden thermischen Fluid thermisch gekoppelt wird und dabei Wärmeenergie an das thermische Fluid abgibt. In einem Enteisungsbetriebszustand ist die Wärmeübertrageranordnung mit dem den Kühlkreislauf stromabwärts des Verbrauchers durchströmenden und eine zweite Temperatur aufweisenden thermischen Fluid thermisch gekoppelt wird und nimmt dabei Wärmeenergie von dem thermischen Fluid auf. Die zweite Temperatur ist höher als die erste Temperatur.

Nachfolgend werden Ausführungsbeispiele der Erfindung anhand der beigefügten schematischen Zeichnungen näher beschrieben, von denen
- Figur 1: ein Kühl- und Gasentfeuchtungssystem zeigt,
- Figur 2: eine erste Variante eines zum Einsatz in dem Kühl- und Gasentfeuchtungssystem gemäß Figur 1 geeigneten Gasentfeuchters zeigt,
- Figur 3: eine zweite Variante eines zum Einsatz in dem Kühl- und Gasentfeuchtungssystem gemäß Figur 1 geeigneten Gasentfeuchters zeigt,
- Figur 4: eine dritte Variante eines zum Einsatz in dem Kühl- und Gasentfeuchtungssystem gemäß Figur 1 geeigneten Gasentfeuchters zeigt,
- Figur 5: eine Schnittansicht eines zum Einsatz in einem Gasentfeuchter gemäß der Figuren 2 bis 4 geeigneten Wärmeübertragers zeigt,
- Figur 6: eine Schnittansicht eines weiteren zum Einsatz in einem Gasentfeuchter gemäß der Figuren 2 bis 4 geeigneten Wärmeübertragers zeigt,
- Figur 7: eine Vorderansicht eines weiteren zum Einsatz in einem Gasentfeuchter gemäß der Figuren 2 bis 4 geeigneten Wärmeübertragers zeigt,
- Figur 8: eine Vorderansicht einer zum Einsatz in einem Gasentfeuchter gemäß der Figuren 3 bis 4 geeigneten Wärmeübertrageranordnung zeigt,
- Figur 9: eine Seitenansicht der Wärmeübertrageranordnung gemäß Figur 8 im mit einem Wassersammler verbundenen Zustand zeigt,
- Figur 10: eine Ansicht der Wärmeübertrageranordnung gemäß Figur 9 ohne äußere Leitung zeigt,
- Figur 11: eine Draufsicht der Wärmeübertrageranordnung gemäß Figur 9 zeigt
- Figur 12: eine schematische Ansicht eines mit dem Kühl- und Gasentfeuchtungssystem gemäß Figur 1 ausgestatteten Transportmittels zeigt.

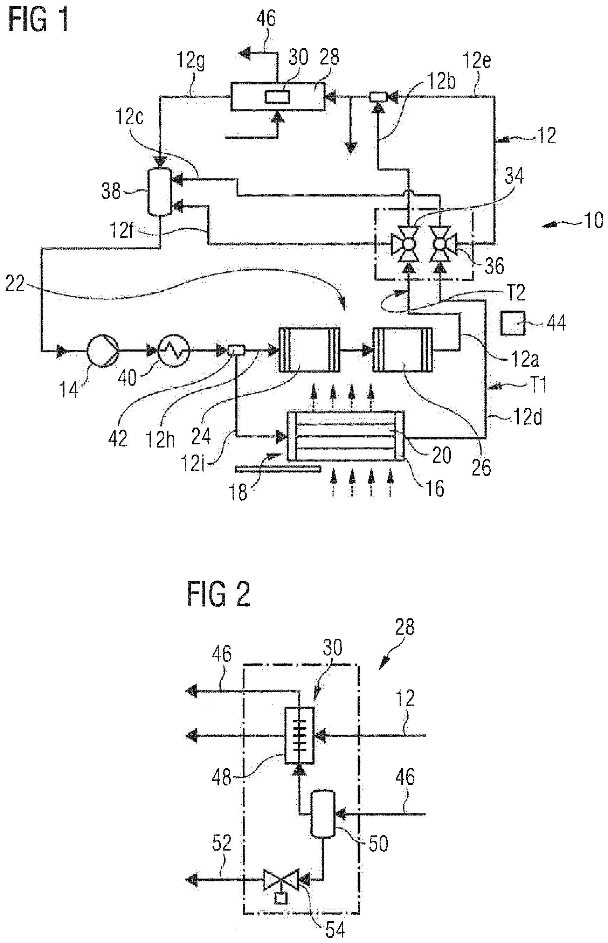

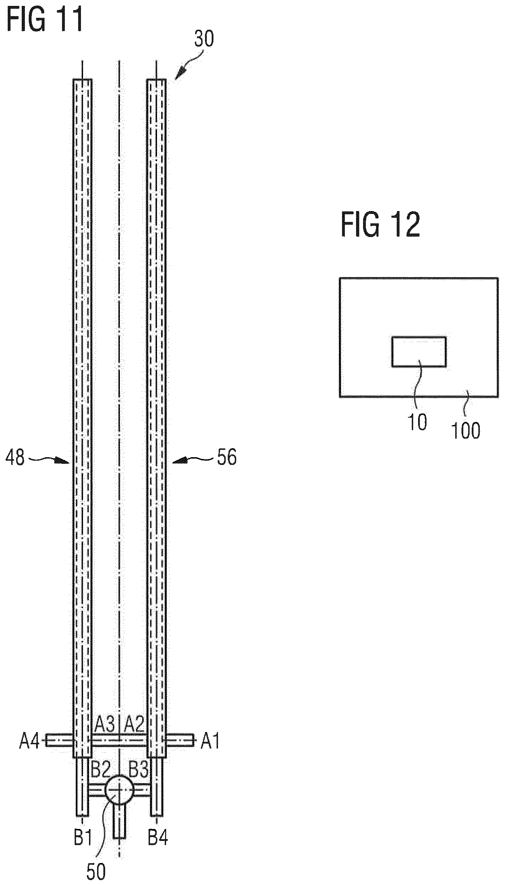

Figur 1 zeigt ein Kühl- und Gasentfeuchtungssystem 10, das zum Einsatz in einem in Figur 12 schematisch veranschaulichten Transportmittel 100 geeignet ist. Das Kühl- und Gasentfeuchtungssystem 10 umfasst einen Kühlkreislauf 12, in dem ein thermisches Fluid, beispielsweise eine Ethylenglykol-Wassermischung oder eine Propylenglykol-Wassermischung, im Kreislauf geführt wird. Zur Förderung des thermischen Fluids durch den Kühlkreislauf 12 ist in dem Kühlkreislauf 12 eine in Form einer Pumpe ausgebildete Fördereinrichtung 14 angeordnet.

In dem Kühlkreislauf 12 ist eine Kühlanordnung 16 angeordnet, die dazu eingerichtet ist, das den Kühlkreislauf 12 durchströmende thermische Fluid zu kühlen. In der in Figur 1 gezeigten Variante umfasst die Kühlanordnung 16 einen in einem Stauluftkanal 18 angeordneten Wärmeübertrager 20. Durch den Wärmeübertrager 20 geleitetes thermisches Fluid wird folglich beim Durchströmen des Wärmeübertragers 20 mit der den Stauluftkanal 18 durchströmenden kalten Außenluft thermisch gekoppelt und dabei auf eine Temperatur von ca. -15 °C gekühlt.

Ferner ist in dem Kühlkreislauf 12 ein Verbraucher 22 angeordnet, der Wärmeenergie an das den Kühlkreislauf 12 durchströmende thermische Fluid abgibt. Der Verbraucher 22 umfasst eine Brennstoffzelle 24 sowie einen Elektrolyseur 26. Der Brennstoffzelle 24 wird im Betrieb Wasserstoff und Sauerstoff zugeführt. Diese Gase setzt die Brennstoffzelle 24 zu Wasser um und erzeugt dabei elektrische Energie. Der Elektrolyseur 26 zersetzt das von der Brennstoffzelle 24 erzeugte Wasser elektrolytisch wieder in die Gase Wasserstoff und Sauerstoff. Bevor diese Gase wieder zu der Brennstoffzelle 24 zirkuliert werden können, müssen sie entfeuchtet werden, wobei die Brennstoffzelle 24 umso effizienter betrieben werden kann, je trockener die ihr zugeführten Gase sind.

Daher umfasst das Kühl- und Gasentfeuchtungssystem 10 ferner einen Gasentfeuchter 28, der seinerseits mit einer in Figur 1 lediglich schematisch angedeuteten Wärmeübertrageranordnung 30 ausgestattet ist. Im Betrieb des Kühl- und Gasentfeuchtungssystems 10 befindet sich die Wärmeübertrageranordnung 30 wechselweise in einem Gasentfeuchtungsbetriebszustand und einem Enteisungsbetriebszustand. In ihrem Gasentfeuchtungsbetriebszustand ist die Wärmeübertrageranordnung 30 mit dem den Kühlkreislauf 12 stromabwärts der Kühlanordnung 16 durchströmenden und eine erste Temperatur T1 aufweisenden thermischen Fluid thermisch gekoppelt und gibt dabei Wärmeenergie an das thermische Fluid ab. In ihrem Gasentfeuchtungsbetriebszustand wird die Wärmeübertrageranordnung 30 des Gasentfeuchters 28 ferner von dem der Brennstoffzelle 24 zuzuführendem Wasserstoff und/oder Sauerstoff durchströmt. Das zu entfeuchtenden Gas wird über eine Gasleitung 46 durch den Gasentfeuchter 28 geleitet.

Beim Durchströmen der Wärmeübertrageranordnung 30 des Gasentfeuchters 28 wird das zu entfeuchtenden Gas unter den Taupunkt von Wasser gekühlt, so dass das in dem Gas enthaltene Wasser als Tauwasser abgeschieden werden kann. Die bei diesem Prozess von dem zu entfeuchtenden Gas abgegebene Wärme wird an das in dem Kühlkreislauf 12 zirkulierende thermische Fluid übertragen. Da der Wärmeübertrageranordnung 30 das aus der Kühlanordnung 16 austretende thermische Fluid mit einer ersten Temperatur T1 von ca. - 15 °C zugeführt wird, ist in dem Gasentfeuchter 28 eine besonders effiziente Trocknung des der Brennstoffzelle 24 zuzuführenden Gases möglich. Allerdings führt die Kühlung des die Wärmeübertrageranordnung 30 durchströmenden Gases auf eine Temperatur unterhalb des Gefrierpunkts von Wasser zu einer Vereisung der Wärmeübertrageranordnung 30.

Aus diesem Grund ist die Wärmeübertrageranordnung 30 des Gasentfeuchters 28 ferner dazu eingerichtet, in einem Enteisungsbetriebszustand mit dem den Kühlkreislauf 12 stromabwärts des Verbrauchers 22 durchströmenden und eine zweite Temperatur T2 aufweisenden thermischen Fluid thermisch gekoppelt zu werden und dabei Wärmeenergie von dem thermischen Fluid aufzunehmen. Die zweite Temperatur T2 ist höher als die erste Temperatur und beträgt hier ca. +80 °C. Mit anderen Worten, in ihrem Enteisungsbetriebszustand wird die Wärmeübertrageranordnung 30 des Gasentfeuchters 28 mithilfe des in dem Kühlkreislauf 12 zirkulierenden thermischen Fluids erwärmt und dadurch enteist.

Um die Wärmeübertrageranordnung 30 des Gasentfeuchters 28 in Abhängigkeit ihres Betriebszustands thermisch mit verschiedenen Abschnitten des Kühlkreislaufs 12 durchströmendem thermischen Fluid zu koppeln umfasst das Kühl- und Gasentfeuchtungssystem 10 ein erstes Steuerventil 34 sowie ein zweites Steuerventil 36. In Figur 1 sind das erste und das zweite Steuerventil 34, 36 als zwei separat ausgebildete strukturelle Einheiten dargestellt. Es ist jedoch auch möglich, die im Folgenden noch näher erläuterten Funktionen des ersten und des zweiten Steuerventils 34, 36 in eine einzige Ventilanordnung zu integrieren.

Das erste Steuerventil 34 ist dazu eingerichtet, das den Kühlkreislauf 12 stromabwärts des Verbrauchers 22 durchströmende und folglich warme thermische Fluid wahlweise der Wärmeübertrageranordnung 30 des Gasentfeuchters 28 oder einem Speicherbehälter 38 zuzuführen. Insbesondere verbindet das erste Steuerventil 34 einen stromabwärts des Verbrauchers 22 verlaufenden ersten Abschnitt 12a des Kühlkreislaufs 12 mit einem in Richtung der Wärmeübertrageranordnung 30 führenden zweiten Abschnitt 12b des Kühlkreislaufs 12, wenn sich die Wärmeübertrageranordnung 30 in ihrem Enteisungsbetriebszustand befindet und mithilfe des den Kühlkreislauf 12 stromabwärts des Verbrauchers 22 durchströmenden warmen thermischen Fluids erwärmt werden soll. Wenn sich die Wärmeübertrageranordnung 30 des Gasentfeuchters 28 dagegen in ihrem Gasentfeuchtungsbetriebszustand befindet, sorgt das erste Steuerventil 34 für eine Trennung des ersten Abschnitts 12a des Kühlkreislaufs 12 von dem zweiten Abschnitt 12b des Kühlkreislaufs 12 und verbindet den ersten Abschnitt 12a des Kühlkreislaufs 12 stattdessen mit einem in Richtung des Speicherbehälters 38 führenden dritten Abschnitt 12c des Kühlkreislaufs 12.

Das zweite Steuerventil 36 ist dazu eingerichtet, das den Kühlkreislauf 12 stromabwärts der Kühlanordnung 16 durchströmende und folglich kalte thermische Fluid wahlweise der Wärmeübertrageranordnung 30 des Gasentfeuchters 28 oder dem Speicherbehälter 38 zuzuführen. Insbesondere verbindet das zweite Steuerventil 36 einen stromabwärts der Kühlanordnung 16 verlaufenden vierten Abschnitt 12d des Kühlkreislaufs 12 mit einem in Richtung der Wärmeübertrageranordnung 30 des Gasentfeuchters 28 führenden fünften Abschnitt 12e des Kühlkreislaufs 12, wenn sich die Wärmeübertrageranordnung 30 in ihrem Gasentfeuchtungsbetriebszustand befindet und mithilfe des den Kühlkreislauf 12 stromabwärts der Kühlanordnung 16 durchströmenden kalten thermischen Fluids gekühlt werden soll. Wenn sich die Wärmeübertrageranordnung 30 dagegen in ihrem Enteisungsbetriebszustand befindet, sorgt das zweite Steuerventil 36 für eine Trennung des vierten Abschnitts 12d des Kühlkreislaufs 12 von dem fünften Abschnitt 12e des Kühlkreislaufs 12 und verbindet den vierten Abschnitt 12d des Kühlkreislaufs 12 stattdessen mit einem in Richtung des Speicherbehälters 38 führenden sechsten 12f Abschnitt des Kühlkreislaufs 12.

In dem in Figur 1 veranschaulichten Ausführungsbeispiel eines Kühl- und Gasentfeuchtungssystems 10 münden sowohl der dritte Abschnitt 12c als auch der sechste Abschnitt 12f des Kühlkreislaufs 12 in den Speicherbehälter 38. In dem Speicherbehälter 38 wird folglich das durch Wärmeübertragung von dem Verbraucher 22 erwärmte thermische Fluid mit dem mithilfe der Kühlanordnung 16 gekühlten thermischen Fluid gemischt. Ferner ist der Speicherbehälter 38 stromabwärts der Wärmeübertrageranordnung 30 des Gasentfeuchters 28 in dem Kühlkreislauf 28 angeordnet und mit einem stromabwärts der Wärmeübertrageranordnung 30 verlaufenden siebten Abschnitt 12g des Kühlkreislaufs 12 verbunden, so dass thermisches Fluid, das im Gasentfeuchtungsbetriebszustand der Wärmeübertrageranordnung 30 Wärme von dem zu entfeuchtenden Gas aufnimmt und dabei erwärmt wird, ebenfalls in den Speicherbehälter 38 geleitet wird.

Ferner ist in dem Kühlkreislauf 12 stromaufwärts des Verbrauchers 22 eine Heizeinrichtung 40 angeordnet, die das den Kühlkreislauf 12 durchströmende thermische Fluid vor dessen thermischer Kopplung mit dem Verbraucher 22 bei Bedarf erwärmt. Insbesondere erwärmt die Heizeinrichtung 40 das den Kühlkreislauf 12 durchströmende thermische Fluid vor dessen thermischer Kopplung mit dem Verbraucher 22 auf eine Temperatur von ca. 75 °C.

Der Kühlkreislauf 12 umfasst ferner einen thermisch mit dem Verbraucher 22 gekoppelten ersten Kreislaufzweig 12h. Ferner umfasst der Kühlkreislauf 12 einen zweiten Kreislaufzweig 12i, der parallel zu dem ersten Kreislaufzweig 12h verläuft und thermisch mit der Kühlanordnung 16 gekoppelt ist. Dementsprechend ist in dem Kühlkreislauf 12 stromaufwärts des Verbrauchers 22 und der Kühlanordnung 16 ein Verzweigungspunkt vorgesehen, an dem sich der Kühlkreislauf 12 in den ersten und den zweiten Kreislaufzweig 12h, 12i verzweigt.

Im Bereich dieses Verzweigungspunkts ist eine Strömungssteuerungseinrichtung 42 in dem Kühlkreislauf 12 angeordnet, die dazu eingerichtet ist, einen ersten Teilvolumenstrom des den Kühlkreislauf 12 durchströmenden thermischen Fluids in den ersten Kreislaufzweig 12h und einen zweiten Teilvolumenstrom des den Kühlkreislauf 12 durchströmenden thermischen Fluids in den zweiten Kreislaufzweig 12i zu leiten. Die Strömungssteuerungseinrichtung 42 umfasst einen hydraulischen Widerstand, der für eine entsprechende Aufteilung des den Kühlkreislauf 12 durchströmenden thermischen Fluids in den ersten Teilvolumenstrom und den zweiten Teilvolumenstrom sorgt, wobei der erste Teilvolumenstrom größer ist als der zweite Teilvolumenstrom. Dementsprechend wird dem Verbraucher 22 mithilfe der Strömungssteuerungseinrichtung 42 ein größerer Volumenstrom des thermischen Fluids zugeführt als der Kühlanordnung 16.

Der Betrieb des Kühl- und Gasentfeuchtungssystems und insbesondere die Betriebszustandswechsel der Wärmeübertrageranordnung 30 des Gasentfeuchters 28 werden mithilfe einer Steuereinheit 44 gesteuert. Insbesondere steuert die Steuereinheit 44 das erste und das zweite Steuerventil 34, 36 um die Wärmeübertrageranordnung 30 zwischen ihrem Gasentfeuchtungsbetriebszustand und ihrem Enteisungsbetriebszustand umzuschalten.

Beispielsweise wird die Wärmeübertrageranordnung 30 aus ihrem Gasentfeuchtungsbetriebszustand in ihren Enteisungsbetriebszustand gesteuert, wenn ein Druckverlust in einem die Wärmeübertrageranordnung 30 durchströmenden zu entfeuchtenden Gasstrom einen Schwellwert überschreitet. Ferner kann die Wärmeübertrageranordnung 30 in den Enteisungsbetriebszustand überführt werden, wenn eine Temperatur des die Wärmeübertrageranordnung 30 durchströmenden zu entfeuchtenden Gasstroms beim Austritt aus der Wärmeübertrageranordnung 30 einen Schwellwert überschreitet. Zusätzlich oder alternativ dazu ist es denkbar, dass die Wärmeübertrageranordnung 30 aus ihrem Gasentfeuchtungsbetriebszustand in ihren Enteisungsbetriebszustand gesteuert wird, wenn ein Feuchtigkeitsgehalt des die Wärmeübertrageranordnung 30 durchströmenden zu entfeuchtenden Gasstroms beim Austritt aus der Wärmeübertrageranordnung 30 einen Schwellwert überschreitet.

Zusätzlich oder alternativ dazu kann die Wärmeübertrageranordnung 30 in ihren Enteisungsbetriebszustand überführt werden, wenn ein Massen- oder Volumenstrom des die Wärmeübertrageranordnung 30 durchströmenden zu entfeuchtenden Gasstroms beim Austritt aus der Wärmeübertrageranordnung 30 einen Schwellwert unterschreitet. Ein weiterer Parameter, der zur Steuerung des Betriebszustands der Wärmeübertrageranordnung 30 herangezogen werden kann, ist der Ablauf eines Zeitintervalls.

Die Steuereinheit 44 kann lediglich einen dieser Parameter zur Steuerung des Betriebszustands der Wärmeübertrageranordnung 30 heranziehen. Alternativ dazu können jedoch auch Parameterkombinationen dazu verwendet werden, die Wärmeübertrageranordnung 30 zu veranlassen, einen Wechsel seines Betriebszustands einzuleiten. Für einen oder mehrere der oben genannten Parameter können entsprechende Kurven in einem Speicher der Steuereinheit 44 hinterlegt sein, die Rückschlüsse auf die Vereisung der Strömungskanäle in der Wärmeübertrageranordnung 30 erlauben.

In Figur 2 ist eine erste Variante eines zum Einsatz in dem Kühl- und Gasentfeuchtungssystem 10 geeigneten Gasentfeuchters 28 näher veranschaulicht. Der in Figur 2 gezeigte Gasentfeuchter 28 umfasst eine Gasleitung 46, die von dem in dem Gasentfeuchter 28 zu entfeuchtenden Gas durchströmt wird. In der Gasleitung ist ein erster Wärmeübertrager 48 angeordnet, d.h. bei der in Figur 2 gezeigten Variante des Gasentfeuchters 28 umfasst die Wärmeübertrageranordnung 30 lediglich einen Wärmeübertrager.

In seinem Gasentfeuchtungsbetriebszustand ist der erste Wärmeübertrager 48 thermisch mit dem den Kühlkreislauf 12 stromabwärts der Kühlanordnung 16 durchströmenden und die erste Temperatur T1 aufweisenden thermischen Fluid gekoppelt, so dass das Gas in der Gasleitung 46 beim Durchströmen des ersten Wärmeübertragers 48 gekühlt und dabei getrocknet wird. In seinem Enteisungsbetriebszustand ist der erste Wärmeübertrager 48 dagegen thermisch mit dem den Kühlkreislauf 12 stromabwärts des Verbrauchers 22 durchströmenden und die zweite Temperatur T2 aufweisenden thermischen Fluid gekoppelt. Das Gas in der Gasleitung 46 wird dann beim Durchströmen des ersten Wärmeübertragers 42 nicht gekühlt und auch nicht getrocknet.

Ferner umfasst der Gasentfeuchter 28 einen in der Gasleitung 46 angeordneten Wassersammler 50, der dazu eingerichtet ist, aus dem ersten Wärmeübertrager 48 austretendes Wasser aufzunehmen. Der Wassersammler 50 und der erste Wärmeübertrager 48 sind derart relativ zueinander angeordnet, dass das aus dem ersten Wärmeübertrager 48 austretende Wasser schwerkraftgetrieben in den Wassersammler 50 fließt. Ferner ist eine in der Figur 2 nicht näher veranschaulichte thermische Kopplung zwischen dem Wassersammler 50 und dem den Kühlkreislauf 12 stromabwärts des Verbrauchers 22 durchströmenden und die zweite Temperatur T2 aufweisenden thermischen Fluid vorgesehen. Der Wassersammler 50 kann somit beheizt werden und ist somit vor Vereisung geschützt.

Mit dem Wassersammler 50 ist eine Wasserauslassleitung 52 verbunden. In der Wasserauslassleitung 52 ist ein drittes Steuerventil 54 angeordnet, welches dazu eingerichtet ist, die Wasserabfuhr aus dem Wassersammler 50 zu steuern. Insbesondere gibt das dritte Steuerventil 54 unter der Steuerung der Steuereinheit 44, die Wasserauslassleitung 52 frei, wenn ein Wasserfüllstand in dem Wassersammler 50 einen ersten Schwellwert überschreitet. Im Gegensatz dazu verschließt das dritte Steuerventil 54 unter der Steuerung der Steuereinheit 44 die Wasserauslassleitung 52 wieder, bevor der Wasserfüllstand in dem Wassersammler 50 einen zweiten Schwellwert unterschreitet, wobei der zweite Schwellwert geringer ist als der erste Schwellwert. Bei einem derartigen Betrieb des dritten Steuerventils 54 verbleibt stets eine Restmenge an Wasser in den Wassersammler 50.

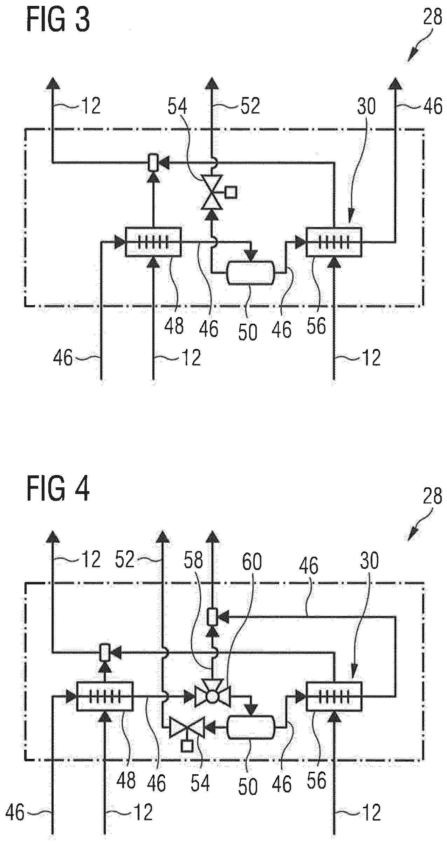

Die in Figur 3 gezeigte Variante eines Gasentfeuchters 28 unterscheidet sich von dem Gasentfeuchter 28 gemäß Figur 2 dadurch, dass sie einen zweiten Wärmeübertrager 56 umfasst. Der erste und der zweite Wärmeübertrager 48, 56 des Gasentfeuchters 28 sind hintereinander in der Gasleitung 46 des Gasentfeuchters 28 angeordnet und dazu eingerichtet unter der Steuerung der Steuereinheit 44, wechselweise zwischen ihrem Enteisungsbetriebszustand und ihrem Gasentfeuchtungsbetriebszustand umgeschaltet zu werden. Demnach ist der erste Wärmeübertrager 48 thermisch mit dem den Kühlkreislauf 12 stromabwärts der Kühlanordnung 16 durchströmenden und die erste Temperatur T1 aufweisenden thermischen Fluid thermisch gekoppelt, während der zweite Wärmeübertrager 56 mit dem den Kühlkreislauf 12 stromabwärts des Verbrauchers 22 durchströmenden und die zweite Temperatur T2 aufweisenden thermischen Fluid thermisch gekoppelt ist und dabei enteist wird. Umgekehrt ist der zweite Wärmeübertrager 56 thermisch mit dem den Kühlkreislauf 12 stromabwärts der Kühlanordnung 16 durchströmenden und die erste Temperatur T1 aufweisenden thermischen Fluid thermisch gekoppelt, während der erste Wärmeübertrager 48 des mit dem den Kühlkreislauf 12 stromabwärts des Verbrauchers 22 durchströmenden und die zweite Temperatur T2 aufweisenden thermischen Fluid thermisch gekoppelt ist und dabei enteist wird. Dadurch wird ein kontinuierlicher Betrieb des Gasentfeuchters 28 ermöglicht.

Der in Figur 3 gezeigte Gasentfeuchter 28 ist mit lediglich einem Wassersammler 50 ausgestattet, der Wasser aus dem ersten und dem zweiten Wärmeübertrager 48, 56 aufnimmt. Die Anordnung des Wassersammlers 50 relativ zu den beiden Wärmeübertrager in 58, 56 ist dabei so gewählt, dass das Wasser aus dem ersten und dem zweiten Wärmeübertrager 58, 56 schwerkraftgetrieben in den Wassersammler 50 fließt.

In dem Gasentfeuchter 28 gemäß Figur 3 ist der Wassersammler 50 zwischen dem ersten und dem zweiten Wärmeübertrager 48, 56 in der Gasleitung 46 des Gasentfeuchters 28 angeordnet. Das in dem Gasentfeuchter 28 zu entfeuchtenden Gas strömt daher nacheinander durch den ersten Wärmetauscher 48, den Wassersammler 50 und den zweiten Wärmetauscher 56. Wenn sich der erste Wärmetauscher 48 in seinem Enteisungsbetriebszustand befindet, wird das zu trocknende Gas zwar zunächst durch den ersten Wärmetauscher 48 geleitet, dabei jedoch nicht getrocknet. Eine Abkühlung und folglich Trocknung des Gases erfolgt erst beim Durchströmen des sich in seinem Gasentfeuchtungsbetriebszustand befindenden zweiten Wärmetauschers 56. Im Gegensatz dazu wird das zu trocknende Gas bereits in dem ersten Wärmetauscher 48 getrocknet, wenn sich dieser in seinem Gasentfeuchtungsbetriebszustand befindet. Wenn sich der zweite Wärmetauscher 56 dann in seinem Enteisungsbetriebszustand befindet, nimmt das Gas beim Durchströmen des zweiten Wärmetauschers 56 wieder etwas Feuchtigkeit auf. Da die Verweilzeit des Gases in dem zweiten Wärmetauscher 56 jedoch gering ist, wird die Trocknungsqualität nicht übermäßig beeinträchtigt.

Im Übrigen entsprechen der Aufbau und die Funktionsweise des Gasentfeuchters 28 gemäß Figur 3 dem Aufbau und der Funktionsweise des in Figur 2 gezeigten Gasentfeuchters 28.

Der in Figur 4 gezeigte Gasentfeuchter 28 unterscheidet sich von dem Gasentfeuchter 28 gemäß Figur 3 dadurch, dass der Gasentfeuchter 28 ferner eine zwischen dem ersten und dem zweiten Wärmeübertrager 48, 56 von der Gasleitung 46 abzweigende und mit einem Auslass der Gasleitung 46 verbundene Bypassleitung 58 umfasst. Insbesondere zweigt die Bypassleitung 58 zwischen dem ersten Wärmeübertrager 48 und dem Wassersammler 50 von der Gasleitung 46 ab. Ein von der Steuereinheit 44 gesteuertes viertes Steuerventil 60 dient dazu, einen die Gasleitung 46 durchströmenden Gasstrom nach dem Durchströmen des ersten Wärmetauschers 48 in die Bypassleitung 58 zu leiten, wenn sich der erste Wärmeübertrager 48 in seinem Gasentfeuchtungsbetriebszustand befindet. In dem ersten Wärmeübertrager 48 getrocknetes Gas kann dann nach dem Durchströmen des ersten Wärmeübertragers 48 unmittelbar dem Auslass der Gasleitung 46 zugeführt werden, ohne das Gas beim Durchströmen des sich in seinem Enteisungsbetriebszustand befindenden zweiten Wärmeübertragers 56 wieder Feuchtigkeit aufnimmt.

Im Gegensatz dazu leitet das vierte Steuerventil 60 den die Gasleitung 46 durchströmenden Gasstrom nach dem Durchströmen des ersten Wärmeübertragers 48 in den zweiten Wärmeübertrager 56, wenn sich der erste Wärmeübertrager 48 in seinem Enteisungsbetriebszustand befindet. Das die Gasleitung 46 durchströmende Gas wird dann beim Durchströmen des sich in seinem Gasentfeuchtungsbetriebszustand befindenden zweiten Wärmeübertragers 56 getrocknet. Der in Figur 4 gezeigte Gasentfeuchter 28 liefert eine besonders hohe Trocknungsqualität.

Im Übrigen entsprechen der Aufbau und die Funktionsweise des Gasentfeuchters 28 gemäß Figur 4 dem Aufbau und der Funktionsweise des in Figur 3 gezeigten Gasentfeuchters 28.

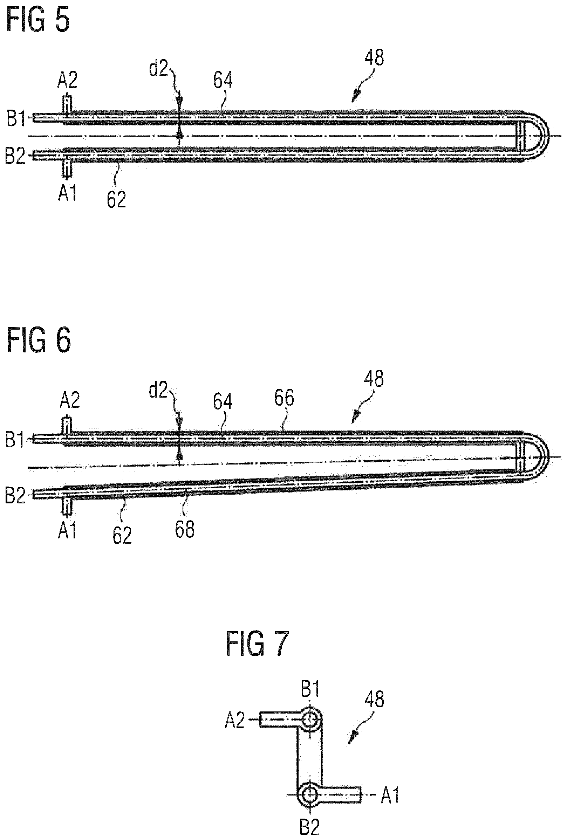

Figur 5 zeigt einen in Form eines Doppelrohrwärmeübertragers ausgebildeten ersten Wärmeübertrager 48. Der zweite Wärmeübertrager 56 kann ebenso ausgestaltet sein. Der Doppelrohrwärmeübertrager 48 gemäß Figur 5 umfasst eine äußere Leitung 62, die eine innere Leitung 64 umgibt. Das thermische Fluid aus dem Kühlkreislauf 12, das zur Kühlung bzw. Beheizung des Wärmeübertragers 48 durch den Wärmeübertrager 48 geleitet wird, durchströmt die äußere Leitung 62 bzw. einen durch die äußere Leitung 62 und die innere Leitung 64 begrenzten Ringspalt von einem Einlass B1 zu einem Auslass B2. Die innere Leitung 64 wird dagegen von einem Einlass A1 zu einem Auslass A2 von dem zu trocknenden Gas durchströmt.

Die in Figur 6 gezeigte Variante eines Wärmeübertragers 48 unterscheidet sich von dem in Figur 5 gezeigten Wärmeübertrager 48 dadurch, dass sich eine Längsachse L1 eines ersten Rohrs 66 des Wärmeübertragers 48 in einem Winkel von 1 bis 10° relativ zu einer Längsachse L2 eines zweiten Rohrs 68 des Wärmeübertragers 48 erstreckt. Im Bereich des Auslasses B2 der inneren Leitung 62 läuft das Kondenswasser ab. Durch die nicht parallele Anordnung der beiden Rohre 66, 68 wird die schwerkraftgetriebene Abführung des Kondenswassers erleichtert, wenn der Gasentfeuchter 28 in dem sich dreidimensionalen bewegenden Luftfahrzeug 100 gemäß Figur 12 verbaut ist und das Luftfahrzeug 100 in der Darstellung gemäß Figur 6 von links nach rechts oder von rechts nach links fliegt.

Die in Figur 7 gezeigte Variante eines Wärmetauschers 48 weist einen versetzt zu dem Einlass A1 angeordneten Auslass A2 auf.

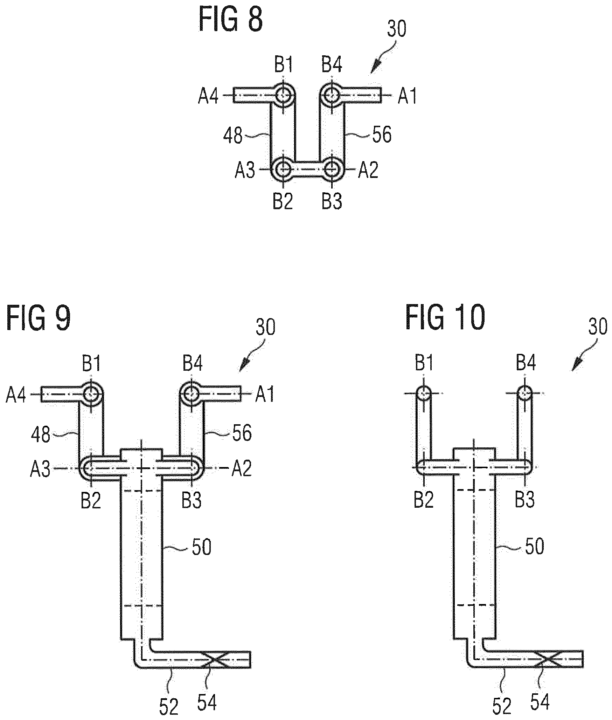

Die Figuren 8 bis 11 zeigen eine einen ersten und einen zweiten Wärmeübertrager 48, 56 umfassende Wärmeübertrageranordnung 30. Der erste und der zweite Wärmeübertrager 58, 56 sind in Reihe geschaltet und werden im Gegenstromprinzip von dem thermischen Fluid aus dem Kühlkreislauf 12 und dem zu trocknende Gas durchströmt. Im Bereich eines Einlasses B1 tritt das zu trocknende Gas in die innere Leitung des ersten Wärmeübertragers 48 ein. Im Bereich eines Auslasses B2 wird das zu trocknende Gas aus der inneren Leitung des ersten Wärmeübertragers 48 geleitet und strömt in den Wassersammler 50. Bei einem Punkt B3 verlässt das Gas den Wassersammler 50 und strömt in eine innere Leitung des zweiten Wärmeübertragers 56 ein. Schließlich verlässt das Gas die innere Leitung des zweiten Wärmeübertrager 56 im Bereich eines Auslasses B4.

Das thermische Fluid durchströmt jeweils den Ringspalt, der zwischen einer äußeren Leitung und einer inneren Leitung der beiden Wärmeübertrager 48, 56 gebildet ist. Das thermische Fluid tritt im Bereich eines Einlasses A1 in den zweiten Wärmeübertrager 56 ein und tritt im Bereich eines Auslasses A2 aus dem zweiten Wärmeübertrager 56 aus. Im Bereich eines Einlasses A3 tritt das thermische Fluid in den ersten Wärmeübertrager 48 ein. Der Austritt des thermischen Fluids aus dem ersten Wärmeübertrager 48 erfolgt schließlich im Bereich eines Auslasses A4. Die äußeren Leitungen der beiden Wärmeübertrager 48, 56 sind im Bereich des Auslasses A2 und des Einlasses A3 miteinander gekoppelt und nicht mit dem Wassersammler 50 verbunden. Alternativ dazu wäre es auch möglich, das zu trocknende Gas durch den Ringspalt zu leiten, der zwischen der inneren Leitung und der äußeren Leitung der beiden Wärmeübertrager 48, 56 vorhanden ist, wenn das thermische Fluid jeweils durch die inneren Leitungen der Wärmeübertrager 48, 56 geleitet wird.

## Patentansprüche

1. Kühl- und Gasentfeuchtungssystem (10), umfassend:
einen Kühlkreislauf (12), in dem ein thermisches Fluid im Kreislauf geführt wird,
eine in dem Kühlkreislauf (12) angeordnete Kühlanordnung (16), die dazu eingerichtet ist, das den Kühlkreislauf (12) durchströmende thermische Fluid zu kühlen,
einen Verbraucher (22), der dazu eingerichtet ist, Wärmeenergie an das den Kühlkreislauf (12) durchströmende thermische Fluid abzugeben, und
einen Gasentfeuchter (28) mit einer Wärmeübertrageranordnung (30), wobei die Wärmeübertrageranordnung (30) dazu eingerichtet ist, in einem Gasentfeuchtungsbetriebszustand mit dem den Kühlkreislauf (12) stromabwärts der Kühlanordnung (16) durchströmenden und eine erste Temperatur (T1) aufweisenden thermischen Fluid thermisch gekoppelt zu werden und dabei Wärmeenergie an das thermische Fluid abzugeben, und in einem Enteisungsbetriebszustand mit dem den Kühlkreislauf (12) stromabwärts des Verbrauchers (22) durchströmenden und eine zweite Temperatur (T2) aufweisenden thermischen Fluid thermisch gekoppelt zu werden und dabei Wärmeenergie von dem thermischen Fluid aufzunehmen, wobei die zweite Temperatur (T2) höher ist als die erste Temperatur (T1).

2. Kühl- und Gasentfeuchtungssystem nach Anspruch 1,
das ferner umfasst:
ein erstes Steuerventil (34), das dazu eingerichtet ist, das den Kühlkreislauf (12) stromabwärts des Verbrauchers (22) durchströmende thermische Fluid der Wärmeübertrageranordnung (30) des Gasentfeuchters (28) und/oder einem Speicherbehälter (38) zuzuführen, und/oder
ein zweites Steuerventil (36), das dazu eingerichtet ist, das den Kühlkreislauf (12) stromabwärts der Kühlanordnung (16) durchströmende thermische Fluid der Wärmeübertrageranordnung (30) des Gasentfeuchters (28) und/oder einem/dem Speicherbehälter (38) zuzuführen.

3. Kühl- und Gasentfeuchtungssystem nach Anspruch 2,
wobei
das erste und das zweite Steuerventil (34, 36) dazu eingerichtet sind, das den Kühlkreislauf (12) stromabwärts des Verbrauchers (22) durchströmende thermische Fluid und das den Kühlkreislauf (12) stromabwärts der Kühlanordnung (16) durchströmende thermische Fluid demselben Speicherbehälter (38) zuzuführen, und/oder
der Speicherbehälter (38) stromabwärts der Wärmeübertrageranordnung (30) des Gasentfeuchters (28) in dem Kühlkreislauf angeordnet ist.

4. Kühl- und Gasentfeuchtungssystem nach einem der Ansprüche 1 bis 3, wobei in dem Kühlkreislauf (12) stromaufwärts des Verbrauchers (22) eine Heizeinrichtung (40) angeordnet ist, die dazu eingerichtet ist, das den Kühlkreislauf (12) durchströmende thermische Fluid vor dessen thermischer Kopplung mit dem Verbraucher (22) zu erwärmen.

5. Kühl- und Gasentfeuchtungssystem nach einem der Ansprüche 1 bis 4, wobei der Kühlkreislauf (12) einen thermisch mit dem Verbraucher (22) gekoppelten ersten Kreislaufzweig (12h) und einen parallel zu dem ersten Kreislaufzweig (12h) verlaufenden und thermisch mit der Kühlanordnung (16) gekoppelten zweiten Kreislaufzweig (12i) umfasst.

6. Kühl- und Gasentfeuchtungssystem nach Anspruch 5,
das ferner eine Strömungssteuerungseinrichtung (42) umfasst, die dazu eingerichtet ist, einen ersten Teilvolumenstrom des den Kühlkreislauf (12) durchströmenden thermischen Fluids in den ersten Kreislaufzweig (12h) und einen zweiten Teilvolumenstrom des den Kühlkreislauf (12) durchströmenden thermischen Fluid in den zweiten Kreislaufzweig (12i) zu leiten, wobei der erste Teilvolumenstrom vorzugsweise größer ist als der zweite Teilvolumenstrom.

7. Kühl- und Gasentfeuchtungssystem nach einem der Ansprüche 1 bis 6, wobei die Wärmeübertrageranordnung des Gasentfeuchters (28) dazu eingerichtet ist, aus ihren Gasentfeuchtungsbetriebszustand in ihren Enteisungsbetriebszustand überzugehen, wenn
ein Druckverlust in einem die Wärmeübertrageranordnung (30) durchströmenden zu entfeuchtenden Gasstrom einen Schwellwert überschreitet,
eine Temperatur des die Wärmeübertrageranordnung (30) durchströmenden zu entfeuchtenden Gasstroms beim Austritt aus der Wärmeübertrageranordnung (30) einen Schwellwert überschreitet,
ein Feuchtigkeitsgehalt des die Wärmeübertrageranordnung (30) durchströmenden zu entfeuchtenden Gasstroms beim Austritt aus der Wärmeübertrageranordnung (30) einen Schwellwert überschreitet,
ein Massen-oder Volumenstrom des die Wärmeübertrageranordnung (30) durchströmenden zu entfeuchtenden Gasstroms beim Austritt aus der Wärmeübertrageranordnung (30) einen Schwellwert unterschreitet und/oder
ein Zeitintervall abgelaufen ist.

8. Kühl- und Gasentfeuchtungssystem nach einem der Ansprüche 1 bis 7, wobei der Gasentfeuchter (28) umfasst:
eine Gasleitung (46), die von dem in dem Gasentfeuchter (28) zu entfeuchtenden Gas durchströmbar ist,
einen in der Gasleitung (46) angeordneten ersten Wärmeübertrager (48) der Wärmeübertrageranordnung (30) und
einen in der Gasleitung (46) angeordneten Wassersammler (50), der dazu eingerichtet ist, aus dem ersten Wärmeübertrager (48) austretendes Wasser aufzunehmen,
wobei der Wassersammler (50) und der erste Wärmeübertrager (48) insbesondere derart relativ zueinander angeordnet sind, dass das aus dem ersten Wärmeübertrager (48) austretende Wasser schwerkraftgetrieben in den Wassersammler (50) fließt und/oder
wobei der Wassersammler (50) insbesondere thermisch mit dem den Kühlkreislauf (12) stromabwärts des Verbrauchers (22) durchströmenden und die zweite Temperatur (T2) aufweisenden thermischen Fluid gekoppelt ist.

9. Kühl- und Gasentfeuchtungssystem nach Anspruch 8,
wobei der Gasentfeuchter (28) ferner umfasst:
eine mit dem Wassersammler (50) verbundene Wasserauslassleitung (52) und
ein in der Wasserauslassleitung (52) angeordnetes drittes Steuerventil (54), welches dazu eingerichtet ist, die Wasserabfuhr aus dem Wassersammler (50) zu steuern,
wobei das dritte Steuerventil (54) dazu eingerichtet ist, die Wasserauslassleitung (52) freizugeben, wenn ein Wasserfüllstand in dem Wassersammler (50) einen ersten Schwellwert überschreitet, und die Wasserauslassleitung (52) wieder zu verschließen, bevor der Wasserfüllstand in dem Wassersammler (50) einen zweiten Schwellwert unterschreitet, wobei der zweite Schwellwert geringer ist als der erste Schwellwert.

10. Kühl- und Gasentfeuchtungssystem nach Anspruch 8 oder 9,
wobei
der Gasentfeuchter (28) ferner einen zweiten Wärmeübertrager (56) der Wärmeübertrageranordnung (30) umfasst,
der erste und der zweite Wärmeübertrager (48, 56) dazu eingerichtet sind, wechselweise zwischen ihrem Enteisungsbetriebszustand und ihrem Gasentfeuchtungsbetriebszustand umgeschaltet zu werden, und/oder
der erste und der zweite Wärmeübertrager (48, 56) hintereinander in der Gasleitung (46) des Gasentfeuchters (28) angeordnet sind.

11. Kühl- und Gasentfeuchtungssystem nach Anspruch 8 oder 9 und Anspruch 10, wobei der Wassersammler (50) dazu eingerichtet ist, aus dem zweiten Wärmeübertrager (56) austretendes Wasser aufzunehmen, wobei der Wassersammler (50) und der zweite Wärmeübertrager (56) derart relativ zueinander angeordnet sind, dass das aus dem zweiten Wärmeübertrager (56) austretende Wasser schwerkraftgetrieben in den Wassersammler (50) fließt, und/oder wobei der Wassersammler (50) zwischen dem ersten und dem zweiten Wärmeübertrager (48, 56) in der Gasleitung (46) des Gasentfeuchters (28) angeordnet ist.

12. Kühl- und Gasentfeuchtungssystem nach Anspruch 10 oder 11,
wobei der Gasentfeuchter (28) ferner umfasst:
eine zwischen dem ersten und dem zweiten Wärmeübertrager (48, 56) von der Gasleitung (46) abzweigende Bypassgasleitung (58),
ein viertes Steuerventil (60), das dazu eingerichtet ist, einen die Gasleitung (46) durchströmenden Gasstrom in die Bypassleitung (58) zu leiten, wenn sich der erste Wärmeübertrager (48) in seinem Gasentfeuchtungsbetriebszustand befindet, und den die Gasleitung (46) durchströmenden Gasstrom in den zweiten Wärmeübertrager (56) zu leiten, wenn sich der erste Wärmeübertrager (48) in seinem Enteisungsbetriebszustand befindet.

13. Kühl- und Gasentfeuchtungssystem nach einem der Ansprüche 8 bis 12, wobei der erste und/oder der zweite Wärmeübertrager (48, 56) der Wärmeübertrageranordnung (30) in Form eines Doppelrohrwärmeübertragers ausgebildet ist/sind, und/oder wobei sich eine Längsachse (L1) eines ersten Rohrs (66) des ersten und/oder des zweiten Wärmeübertragers (48, 56) in einem Winkel von 1 bis 10° relativ zu einer Längsachse (L2) eines zweiten Rohrs (68) des ersten und/oder des zweiten Wärmeübertragers (48, 56) erstreckt.

14. Transportmittel (100), das ein Kühl- und Gasentfeuchtungssystem (10) gemäß einem der Ansprüche 1 bis 13 umfasst.

15. Verfahren zum Betreiben eines Kühl- und Gasentfeuchtungssystem (10), das die Schritte umfasst:
Leiten eines thermischen Fluids durch einen Kühlkreislauf (12),
Kühlen des den Kühlkreislauf (12) durchströmenden thermischen Fluids in einer in dem Kühlkreislauf (12) angeordneten Kühlanordnung (16),
thermisches Koppeln des den Kühlkreislauf (12) durchströmenden thermischen Fluids mit einem Verbraucher (22), der Wärmeenergie an das den Kühlkreislauf (12) durchströmende thermische Fluid abgibt,
Entfeuchten eines Gasstroms mittels eines Gasentfeuchters (28), wobei eine Wärmeübertrageranordnung (30) des Gasentfeuchters (28) in einem Gasentfeuchtungsbetriebszustand mit dem den Kühlkreislauf (12) stromabwärts der Kühlanordnung (16) durchströmenden und eine erste Temperatur (T1) aufweisenden thermischen Fluid thermisch gekoppelt wird und dabei Wärmeenergie an das thermische Fluid abgibt, und in einem Enteisungsbetriebszustand mit dem den Kühlkreislauf (12) stromabwärts des Verbrauchers (22) durchströmenden und eine zweite Temperatur (T2) aufweisenden thermischen Fluid thermisch gekoppelt wird und dabei Wärmeenergie von dem thermischen Fluid aufnimmt, wobei die zweite Temperatur (T2) höher ist als die erste Temperatur (T1).

## Claims

1. A cooling and gas dehumidification system (10) comprising:
a cooling circuit (12) in which a thermal fluid is circulated, and
a cooling arrangement (16) arranged in the cooling circuit (12) and adapted to cool the thermal fluid flowing through the cooling circuit (12),
a consumer (22) arranged to deliver thermal energy to the thermal fluid flowing through the cooling circuit (12), and
a gas dehumidifier (28) having a heat exchanger arrangement (30), the heat exchanger arrangement (30) being arranged, in a gas dehumidification operating state, to be thermally coupled to the thermal fluid flowing through the cooling circuit (12) downstream of the cooling arrangement (16) and having a first temperature (T1) and, in the process, to emit thermal energy to the thermal fluid and, in a deicing operating state, being thermally coupled to the thermal fluid flowing through the cooling circuit (12) downstream of the consumer (22) and having a second temperature (T2), thereby receiving thermal energy from the thermal fluid, the second temperature (T2) being higher than the first temperature (T1).

2. Cooling and gas dehumidification system according to claim 1, further comprising:
a first control valve (34) adapted to supply the thermal fluid flowing through the cooling circuit (12) downstream of the consumer (22) to the heat exchanger arrangement (30) of the gas dehumidifier (28) and/or to a storage tank (38), and/or
a second control valve (36) which is set up to feed the thermal fluid flowing through the cooling circuit (12) downstream of the cooling arrangement (16) to the heat exchanger arrangement (30) of the gas dehumidifier (28) and/or to a/the storage tank (38).

3. Cooling and gas dehumidification system according to claim 2, wherein
the first and second control valves (34, 36) are arranged to supply the thermal fluid flowing through the cooling circuit (12) downstream of the consumer (22) and the thermal fluid flowing through the cooling circuit (12) downstream of the cooling arrangement (16) to the same storage tank (38), and/or
the storage tank (38) is arranged downstream of the heat exchanger arrangement (30) of the gas dehumidifier (28) in the cooling circuit.

4. Cooling and gas dehumidification system according to any one of claims 1 to 3, wherein a heating device (40) is arranged in the cooling circuit (12) upstream of the consumer (22), which is set up to heat the thermal fluid flowing through the cooling circuit (12) prior to its thermal coupling with the consumer (22).

5. Cooling and gas dehumidification system according to any one of claims 1 to 4, wherein the cooling circuit (12) comprises a first circuit branch (12h) thermally coupled to the consumer (22) and a second circuit branch (12i) running parallel to the first circuit branch (12h) and thermally coupled to the cooling arrangement (16).

6. Cooling and gas dehumidification system according to claim 5,
further comprising a flow control device (42) arranged to direct a first partial volumetric flow of the thermal fluid flowing through the cooling circuit (12) into the first circuit branch (12h) and a second partial volumetric flow of the thermal fluid flowing through the cooling circuit (12) into the second circuit branch (12i), the first partial volumetric flow preferably being greater than the second partial volumetric flow.

7. Cooling and gas dehumidification system according to any one of claims 1 to 6, wherein the heat exchanger arrangement of the gas dehumidifier (28) is arranged to change from its gas dehumidification operating state to its deicing operating state when
a pressure loss in a gas stream to be dehumidified flowing through the heat exchanger arrangement (30) exceeds a threshold value,
a temperature of the gas stream to be dehumidified flowing through the heat exchanger arrangement (30) exceeds a threshold value on leaving the heat exchanger arrangement (30),
a moisture content of the gas stream to be dehumidified flowing through the heat exchanger arrangement (30) exceeds a threshold value on leaving the heat exchanger arrangement (30),
a mass or volume flow of the gas flow to be dehumidified flowing through the heat exchanger arrangement (30) falls below a threshold value on leaving the heat exchanger arrangement (30) and/or
a time interval has elapsed.

8. Cooling and gas dehumidification system according to any one of claims 1 to 7, wherein the gas dehumidifier (28) comprises:
a gas line (46) through which the gas to be dehumidified in the gas dehumidifier (28) can flow,
a first heat exchanger (48) of the heat exchanger arrangement (30) arranged in the gas line (46) and
a water collector (50) which is arranged in the gas line (46) and is designed to receive water emerging from the first heat exchanger (48),
the water collector (50) and the first heat exchanger (48) being arranged in particular relative to one another in such a way that the water emerging from the first heat exchanger (48) flows into the water collector (50) under the force of gravity and/or
wherein the water collector (50) is in particular thermally coupled with the thermal fluid flowing through the cooling circuit (12) downstream of the consumer (22) and having the second temperature (T2).

9. Cooling and gas dehumidification system according to claim 8,
wherein the gas dehumidifier (28) further comprises:
a water outlet conduit (52) connected to the water collector (50); and
a third control valve (54) disposed in said water outlet conduit (52) and adapted to control the discharge of water from said water collector (50),
the third control valve (54) being set up to release the water outlet line (52) when a water level in the water collector (50) exceeds a first threshold value, and to close the water outlet line (52) again before the water level in the water collector (50) falls below a second threshold value, the second threshold value being lower than the first threshold value.

10. Cooling and gas dehumidification system according to claim 8 or 9,
wherein
the gas dehumidifier (28) further comprises a second heat exchanger (56) of the heat exchanger arrangement (30),
said first and second heat exchangers (48, 56) are adapted to be alternately switched between their deicing operating state and their gas dehumidification operating state, and/or
the first and second heat exchangers (48, 56) are arranged in series in the gas line (46) of the gas dehumidifier (28).

11. Cooling and gas dehumidification system according to claim 8 or 9 and claim 10, wherein the water collector (50) is arranged to receive water emerging from the second heat exchanger (56), wherein the water collector (50) and the second heat exchanger (56) are arranged relative to each other such that the water emerging from the second heat exchanger (56) flows into the water collector (50) driven by gravity, and/or wherein the water collector (50) is arranged between the first and the second heat exchanger (48, 56) in the gas line (46) of the gas dehumidifier (28).

12. Cooling and gas dehumidification system according to claim 10 or 11,
wherein the gas dehumidifier (28) further comprises:
a bypass gas line (58) branching from the gas line (46) between the first and second heat exchangers (48, 56),
a fourth control valve (60) adapted to direct a gas flow passing through the gas line (46) into the bypass line (58) when the first heat exchanger (48) is in its gas dehumidification operating state and to direct the gas flow passing through the gas line (46) into the second heat exchanger (56) when the first heat exchanger (48) is in its deicing operating state.

13. Cooling and gas dehumidification system according to any one of claims 8 to 12, wherein the first and/or the second heat exchanger (48, 56) of the heat exchanger arrangement (30) is/are in the form of a double tube heat exchanger, and/or wherein a longitudinal axis (L1) of a first tube (66) of the first and/or the second heat exchanger (48, 56) extends at an angle of 1 to 10° relative to a longitudinal axis (L2) of a second tube (68) of the first and/or the second heat exchanger (48, 56).

14. Transport means (100) comprising a cooling and gas dehumidification system (10) according to any one of claims 1 to 13.

15. A method of operating a cooling and gas dehumidification system (10) comprising the steps of:
passing a thermal fluid through a cooling circuit (12),
cooling the thermal fluid flowing through the cooling circuit (12) in a cooling arrangement (16) disposed in the cooling circuit (12),
thermally coupling the thermal fluid flowing through the cooling circuit (12) to a consumer (22) which delivers thermal energy to the thermal fluid flowing through the cooling circuit (12),
dehumidifying a gas stream by means of a gas dehumidifier (28), a heat exchanger arrangement (30) of the gas dehumidifier (28) being thermally coupled in a gas dehumidification operating state to the thermal fluid flowing through the cooling circuit (12) downstream of the cooling arrangement (16) and having a first temperature (T1), and in the process emitting thermal energy to the thermal fluid and in a deicing operating state is thermally coupled to the thermal fluid flowing through the cooling circuit (12) downstream of the consumer (22) and having a second temperature (T2) and in so doing absorbs thermal energy from the thermal fluid, the second temperature (T2) being higher than the first temperature (T1).

## Revendications

1. Système de refroidissement et de déshumidification de gaz (10) comprenant:
un circuit de refroidissement (12) dans lequel circule un fluide thermique
un l'agencement de refroidissement (16) disposé dans le circuit de refroidissement (12) et adapté pour refroidir le fluide thermique circulant dans le circuit de refroidissement (12)
un consommateur (22) agencé pour fournir de l'énergie thermique au fluide thermique circulant dans le circuit de refroidissement (12), et
un déshumidificateur de gaz (28) ayant un agencement d'échangeur de chaleur (30), l'agencement d'échangeur de chaleur (30) étant agencé, dans un état de fonctionnement de déshumidification de gaz, pour être couplé thermiquement au fluide thermique circulant dans le circuit de refroidissement (12) en aval de l'agencement de refroidissement (16) et ayant une première température (T1), et pour émettre ainsi de l'énergie thermique vers le fluide thermique et, dans un état de fonctionnement de dégivrage, étant couplé thermiquement au fluide thermique s'écoulant à travers le circuit de refroidissement (12) en aval du consommateur (22) et ayant une seconde température (T2), recevant ainsi de l'énergie thermique du fluide thermique, la seconde température (T2) étant supérieure à la première température (T1).

2. Système de refroidissement et de déshumidification de gaz selon la revendication 1, comprenant en outre :
une première vanne de régulation (34) adaptée pour amener le fluide thermique circulant dans le circuit de refroidissement (12) en aval du consommateur (22) vers l'agencement d'échangeur de chaleur (30) du déshumidificateur de gaz (28) et/ou vers un réservoir de stockage (38), et/ou
une deuxième vanne de régulation (36) agencée pour amener le fluide thermique circulant dans le circuit de refroidissement (12) en aval de l'agencement de refroidissement (16) à l'agencement d'échangeur de chaleur (30) du déshumidificateur de gaz (28) et/ou à un réservoir de stockage (38).

3. Système de refroidissement et de déshumidification de gaz selon la revendication 2,
où les première et deuxième vannes de régulation (34, 36) sont agencées pour amener le fluide thermique circulant dans le circuit de refroidissement (12) en aval du consommateur (22) et le fluide thermique circulant dans le circuit de refroidissement (12) en aval de l'agencement de refroidissement (16) au même réservoir de stockage (38), et/ou
le réservoir de stockage (38) est disposé en aval de l'agencement d'échangeur de chaleur (30) du déshumidificateur de gaz (28) dans le circuit de refroidissement.

4. Système de refroidissement et de déshumidification de gaz selon l'une quelconque des revendications 1 à 3,
dans lequel un dispositif de chauffage (40) est disposé dans le circuit de refroidissement (12) en amont du consommateur (22), lequel dispositif de chauffage est disposé pour chauffer le fluide thermique s'écoulant à travers le circuit de refroidissement (12) avant son couplage thermique avec le consommateur (22).

5. Système de refroidissement et de déshumidification de gaz selon l'une quelconque des revendications 1 à 4,
dans lequel le circuit de refroidissement (12) comprend une première branche de circuit (12h) couplée thermiquement au consommateur (22) et une seconde branche de circuit (12i) s'étendant parallèlement à la première branche de circuit (12h) et couplée thermiquement au l'agencement de refroidissement (16).

6. Système de refroidissement et de déshumidification de gaz selon la revendication 5,
comprenant en outre un moyen de commande de débit (42) agencé pour diriger un premier débit volumétrique partiel du fluide thermique s'écoulant à travers le circuit de refroidissement (12) dans la première branche de circuit (12h) et un second débit volumétrique partiel du fluide thermique s'écoulant à travers le circuit de refroidissement (12) dans la seconde branche de circuit (12i), le premier débit volumétrique partiel étant de préférence supérieur au second débit volumétrique partiel.

7. Système de refroidissement et de déshumidification de gaz selon l'une quelconque des revendications 1 à 6,
dans lequel l'agencement d'échangeur de chaleur du déshumidificateur de gaz (28) est agencé pour passer de son état de fonctionnement de déshumidification de gaz à son état de fonctionnement de dégivrage lorsque
une perte de pression dans un courant de gaz à déshumidifier s'écoulant à travers l'agencement d'échangeur de chaleur (30) dépasse une valeur seuil
une température du flux de gaz à déshumidifier s'écoulant à travers l'agencement d'échangeur de chaleur (30) dépasse une valeur de seuil lorsqu'il sort de l'agencement d'échangeur de chaleur (30),
une teneur en humidité du flux de gaz à déshumidifier s'écoulant à travers l'agencement d'échangeur de chaleur (30) dépasse une valeur seuil en quittant l'agencement d'échangeur de chaleur (30),
un débit massique ou volumique du flux de gaz à déshumidifier s'écoulant à travers l'agencement d'échangeur de chaleur (30) tombe en dessous d'une valeur seuil en quittant l'agencement d'échangeur de chaleur (30) et/ou
un intervalle de temps s'est écoulé.

8. Système de refroidissement et de déshumidification de gaz selon l'une quelconque des revendications 1 à 7, dans lequel le déshumidificateur de gaz (28) comprend:
une conduite de gaz (46) à travers lequel le gaz à déshumidifier dans le déshumidificateur de gaz (28) peut s'écouler,
un premier échangeur de chaleur (48) de l'agencement d'échangeur de chaleur (30) disposé dans la conduite de gaz (46), et
un collecteur d'eau (50) qui est disposé dans la conduite de gaz (46) et est conçu pour recevoir l'eau qui sort du premier échangeur de chaleur (48),
le collecteur d'eau (50) et le premier échangeur de chaleur (48) étant disposés notamment l'un par rapport à l'autre de telle sorte que l'eau sortant du premier échangeur de chaleur (48) s'écoule, sous l'effet de la gravité, dans le collecteur d'eau (50) et/ou
dans lequel le collecteur d'eau (50) est notamment couplé thermiquement au fluide thermique circulant dans le circuit de refroidissement (12) en aval du consommateur (22) et ayant la deuxième température (T2).

9. Système de refroidissement et de déshumidification de gaz selon la revendication 8, dans lequel le déshumidificateur de gaz (28) comprend en outre:
une conduite de sortie d'eau (52) reliée au collecteur d'eau (50); et
une troisième vanne de commande (54) disposée dans ledit conduit de sortie d'eau (52) et adaptée pour commander l'évacuation de l'eau dudit collecteur d'eau (50),
la troisième vanne de commande (54) étant configurée pour libérer la conduite de sortie d'eau (52) lorsqu'un niveau d'eau dans le collecteur d'eau (50) dépasse une première valeur seuil, et pour fermer à nouveau la conduite de sortie d'eau (52) avant que le niveau d'eau dans le collecteur d'eau (50) ne descende en dessous d'une deuxième valeur seuil, la deuxième valeur seuil étant inférieure à la première valeur seuil.

10. Système de refroidissement et de déshumidification de gaz selon la revendication 8 ou 9, où
le déshumidificateur de gaz (28) comprend en outre un deuxième échangeur de chaleur (56) de l'agencement d'échangeur de chaleur (30),
lesdits premier et deuxième échangeurs de chaleur (48, 56) sont adaptés pour être alternativement commutés entre leur état de fonctionnement de dégivrage et leur état de fonctionnement de déshumidification de gaz, et/ou
les premier et deuxième échangeurs de chaleur (48, 56) sont disposés en série dans la conduite de gaz (46) du déshumidificateur de gaz (28).

11. Système de refroidissement et de déshumidification de gaz selon la revendication 8 ou 9 et la revendication 10,
dans lequel le collecteur d'eau (50) est agencé pour recevoir l'eau sortant du deuxième échangeur de chaleur (56), dans lequel le collecteur d'eau (50) et le deuxième échangeur de chaleur (56) sont agencés l'un par rapport à l'autre de sorte que l'eau sortant du deuxième échangeur de chaleur (56) s'écoule dans le collecteur d'eau (50) entraîné par gravité, et/ou dans lequel le collecteur d'eau (50) est agencé entre le premier et le deuxième échangeur de chaleur (48, 56) dans la conduite de gaz (46) du déshumidificateur de gaz (28).

12. Système de refroidissement et de déshumidification de gaz selon la revendication 10 ou 11,
dans lequel le déshumidificateur de gaz (28) comprend en outre:
une conduite de gaz de dérivation (58) dérivant de la conduite de gaz (46) entre les premier et deuxième échangeurs de chaleur (48, 56),
une quatrième vanne de commande (60) adaptée pour diriger un flux de gaz passant à travers la conduite de gaz (46) dans la conduite de dérivation (58) lorsque le premier échangeur de chaleur (48) est dans son état de fonctionnement de déshumidification de gaz et pour diriger le flux de gaz passant à travers la conduite de gaz (46) dans le deuxième échangeur de chaleur (56) lorsque le premier échangeur de chaleur (48) est dans son état de fonctionnement de dégivrage.

13. Système de refroidissement et de déshumidification de gaz selon l'une quelconque des revendications 8 à 12,
dans lequel le premier et/ou le deuxième échangeur de chaleur (48, 56) de l'agencement d'échangeur de chaleur (30) est/sont sous la forme d'un échangeur de chaleur à double tube, et/ou dans lequel un axe longitudinal (L1) d'un premier tube (66) du premier et/ou du deuxième échangeur de chaleur (48, 56) s'étend à un angle de 1 à 10° par rapport à un axe longitudinal (L2) d'un second tube (68) du premier et/ou du deuxième échangeur de chaleur (48, 56).

14. Moyen de transport (100) comprenant un système de refroidissement et de déshumidification de gaz (10) selon l'une quelconque des revendications 1 à 13.

15. Procédé de fonctionnement d'un système de refroidissement et de déshumidification de gaz (10), comprenant les étapes suivantes comprend les étapes suivantes :
faire passer un fluide thermique dans un circuit de refroidissement (12),
refroidir le fluide thermique circulant dans le circuit de refroidissement (12) dans un ensemble de refroidissement (16) disposé dans le circuit de refroidissement (12),
coupler thermiquement le fluide thermique s'écoulant à travers le circuit de refroidissement (12) à un consommateur (22) qui fournit de l'énergie thermique au fluide thermique s'écoulant à travers le circuit de refroidissement (12),
déshumidifier un flux de gaz au moyen d'un déshumidificateur de gaz (28), un agencement d'échangeur de chaleur (30) du déshumidificateur de gaz (28) étant couplé thermiquement dans un état de fonctionnement de déshumidification de gaz au fluide thermique s'écoulant à travers le circuit de refroidissement (12) en aval de l'agencement de refroidissement (16) et ayant une première température (T1), et émettant dans ce cas de l'énergie thermique vers le fluide thermique et, dans un état de fonctionnement de dégivrage, est couplé thermiquement au fluide thermique s'écoulant à travers le circuit de refroidissement (12) en aval du consommateur (22) et ayant une seconde température (T2) et, ce faisant, absorbe l'énergie thermique du fluide thermique, la seconde température (T2) étant supérieure à la première température (T1).
